Europäisches Patentamt

European Patent Office

Office européen des brevets

(19)

(11) Veröffentlichungsnummer: **0 257 341**
**B1**

(12)  EUROPÄISCHE PATENTSCHRIFT

(45) Veröffentlichungstag der Patentschrift:
**10.01.90**

(51) Int. Cl.⁴: **B62D 37/02**

(21) Anmeldenummer: **87111075.5**

(22) Anmeldetag: **30.07.87**

(54) **Kraftfahrzeug, insbesondere Personenkraftwagen.**

(30) Priorität: **30.07.86  DE 3625814**

(43) Veröffentlichungstag der Anmeldung:
**02.03.88 Patentblatt 88/9**

(45) Bekanntmachung des Hinweises auf die Patenterteilung:
**10.01.90 Patentblatt 90/2**

(84) Benannte Vertragsstaaten:
**DE FR GB IT SE**

(56) Entgegenhaltungen:
**EP-A- 0 030 122**
**DE-A- 1 630 321**
**DE-A- 2 841 141**
**DE-A- 3 331 583**
**DE-A- 3 409 667**
**DE-B- 1 630 241**
**FR-A- 2 463 711**
**US-A- 4 379 582**

(73) Patentinhaber: **Bayerische Motoren Werke Aktiengesellschaft, Patentabteilung AJ-3 Postfach 40 02 40 Petuelring 130, D-8000 München 40(DE)**

(72) Erfinder: **Martin, Ronny, Dipl.-Ing., Albert-Schweitzer-Strasse 54, D-8025 Unterhaching(DE)**
Erfinder: **Bez, Ulrich, Dr.Ing., Eichenstrasse 13, D-8134 Pöcking(DE)**
Erfinder: **Pregl, Alexander, Dipl.-Ing., Lauthstrasse 14, D-8000 München 50(DE)**
Erfinder: **Janssen, Lutz J., Dipl.-Ing., Friedastrasse 7 E, D-8000 München 71(DE)**
Erfinder: **Lagaay, Harm, Schmidschneider-Strasse 6, D-8036 Herrsching(DE)**

(74) Vertreter: **Draeger, Karlfried, Bayerische Motoren Werke Aktiengesellschaft Postfach 40 02 40 Petuelring 130 - AJ 36, D-8000 München 40(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Kraftfahrzeug, insbesondere Personenkraftwagen, nach dem Oberbegriff des Patentanspruchs 1.

Bei einem bekannten Personenkraftwagen dieser Art (US-A 4 379 582), bei dem eine gute Bodenhaftung des Fahrzeugs erreicht werden soll, ist eine hintere Stoßfängereinheit vorgesehen, die einen oberen Hauptstoßfänger und einen unteren Abtriebsstoßfänger aufweist. Der Hauptstoßfänger ist höher als übliche Stoßfänger und auch höher als der vordere Stoßfänger des bekannten Personenkraftwagens angeordnet und mit einem sich von vorne nach hinten erstreckenden, gerade ausgebildeten Heckrahmenteil fest verbunden. Er bildet mit einem unteren Teil das hintere Ende des ansteigenden Heckbodens und schließt dicht an das untere Ende einer Heckabschlußwand an, die sich von dem hinteren Ende des ansteigenden Heckbodens aus senkrecht nach oben erstreckt und von der aus er nach hinten ragt. Der Abtriebsstoßfänger ist als Luftleitflügel mit umgedrehtem Tragflügelprofil ausgebildet und unter Freilassung einer schräg nach hinten ansteigenden, sich in dieser Richtung düsenartig verengenden Luftdurchtrittsöffnung unterhalb des Hauptstoßfängers und des nach vorne an diesen anschließenden Teils des ansteigenden Heckbodens angeordnet. Seine gerundet ausgebildete Vorderkante befindet sich etwa auf halber Höhe des hinteren Fahrzeugrades und etwa auf halber Länge der Entfernung der Heckabschlußwand von der hinteren Begrenzung des hinteren Fahrzeugrades. Mit seiner Hinterkante ragt der Abtriebsstoßfänger über die Heckabschlußwand hinaus nach hinten, jedoch nicht so weit wie der Hauptstoßfänger. Dieser und der Abtriebsstoßfänger erstrecken sich an der Fahrzeugrückseite quer zur Fahrtrichtung bis zu den beiden von den Außenseiten der Fahrzeughinterräder definierten Längsebenen nach außen. An ihren Enden sind sie durch zwei äußere Stützglieder miteinander verbunden, die sich von dem Hauptstoßfänger aus nach unten erstrecken. Zwischen den beiden äußeren Stützgliedern sind mit Abstand von diesen zwei mit dem Abtriebsstoßfänger verbundene innere Stützglieder angeordnet, die an dem Heckrahmen des Fahrzeugs befestigt sind. Die vier Stützglieder sind aus federndem Werkstoff gebildet und dienen als Seitenwände der zwischen dem ansteigenden Heckboden und dem Abtriebsstoßfänger vorgesehenen Luftdurchtrittsöffnung und auch als stoßabsorbierende Glieder. Der Abtriebsstoßfänger ist vorzugsweise ebenfalls aus einem stoßabsorbierenden federnden Werkstoff gebildet und dient als untere Heckabschlußwand. Bei hohen Fahrgeschwindigkeiten bildet sich an dem Fahrzeugheck eine Luftströmung aus, die einen Abtrieb bewirkt, der jedoch begrenzt ist, weil die Höhenanordnung des Hauptstoßfängers und die Stoßfängerfunktion des Abtriebsstoßfängers nur eine bestimmte Luftströmungsführung zulassen und durch den über die Heckabschlußwand hinaus nach hinten ragenden Hauptstoßfänger Störungen der nach oben gerichteten Luftströmung, wie etwa Wirbelbildungen, verursacht werden. Die Stoßfängerfunktion ist insbesondere wegen der hohen Anordnung des Hauptstoßfängers unbefriedigend und die Mehrfachfunktion des Abtriebsstoßfängers, der als Luftleitflügel und als Stoßfänger wirkt, führt zu Schwierigkeiten, insbesondere hinsichtlich der Höhenanordnung, der Neigung, des Werkstoffes, der Stabilität, der Aufhängung und der Reparaturanfälligkeit.

Weitere Personenkraftwagen jeweils mit einem hinteren Stoßfänger, der in Höhe der Heckabschlußwand angeordnet ist, und mit einem Luftleitflügel mit Tragflügelprofil, der mit Abstand unterhalb des hinteren Heckbereichs desFahrzeugaufbaus angeordnet ist und von vorne kommende Anströmluft schräg nach hinten ansteigend leitet, sind aus DE-A 3 331 583, JP-U-Sho 5 263 828 und JP-U-Sho 55 117 369 bekannt.

Der Erfindung liegt in erster Linie die Aufgabe zugrunde, ein Kraftfahrzeug der eingangs genannten Art zu schaffen, das für den praktischen Einsatz im üblichen Straßenverkehr geeignet ist und eine aerodynamische Heckgestaltung aufweist, die eine gute Bodenhaftung, insbesondere auch bei hohen Fahrgeschwindigkeiten, gewährleistet.

Die Lösung dieser Aufgabe ist in dem kennzeichnenden Teil des Patentanspruchs 1 angegeben. Durch sie wird erreicht, daß bei vorgegebener Höhenanordnung des hinteren Stoßfängers der ansteigende Heckboden in der für die gewünschte Luftführung erforderlichen Weise freizügig weit nach oben geführt sein und die Luft hinter dem hinteren Ende des ansteigenden Heckbodens im wesentlichen störungsfrei nach oben strömen kann. Der bis auf die Bereiche, in denen der hintere Stoßfänger mit dem Fahrzeugaufbau verbunden ist, allseits umströmte Querschnitt des hinteren Stoßfängers kann weitgehend strömungsgünstig gestaltet sein, so daß einerseits die Stoßfängerfunktion wahrgenommen werden kann und andererseits ein geringer Strömungswiderstand und eine Leitwirkung verwirklicht sein können. Der Luftleitflügel kann in der für die gewünschte Erzielung einer guten Bodenhaftung des Fahrzeugs günstigen Weise, insbesondere in einer für diesen Zweck vorteilhaften Höhe, angeordnet sein. Durch die Erfindung wird mithin erreicht, daß mit einfachen Mitteln am Fahrzeugheck eine fahrgeschwindigkeitsabhängige erhebliche Abtriebskraft hervorgerufen werden kann, ohne daß die äußere Gestaltung des Fahrzeugs in störender Weise von der üblichen Formgebung abweicht, die weitgehend durch gesetzliche Bestimmungen und praktische Erfordernisse festgelegt ist. Die Erfindung ist insbesondere für kleinere und leichtere Fahrzeuge, etwa sportliche Zweisitzer, vorteilhaft. Sie ermöglicht nicht nur eine gute Traktion, sondern auch das Aufbringen hoher Seitenführungskräfte und damit eine gute Spurhaltung und Fahrstabilität. Sie kann bei Fahrzeugen unterschiedlicher Antriebsarten eingesetzt werden, beispielsweise bei Fahrzeugen mit Standardantrieb, also mit vorne angeordnetem Motor und Hinterradantrieb, bei Fahrzeugen mit Frontmotor und Frontantrieb oder solchen mit Allradantrieb.

Ausgestaltungen der Erfindung sind in den Unteransprüchen gekennzeichnet. Vorteile, die mit diesem verbunden sind, ergeben sich aus der nachfolgenden Beschreibung.

In der Zeichnung sind Ausführungsbeispiele der Erfindung schematisch dargestellt, und zwar zeigt

Fig. 1 einen ersten Personenkraftwagen in Seitenansicht und zum Teil in Durchsicht und im Schnitt,

Fig. 2 eine Teiluntersicht der Personenkraftwagens nach Fig. 1,

Fig. 3 den hinteren Teil eines zweiten Personenkraftwagens in einem Längsschnitt,

Fig. 4 geometrische Zuordnungen bei dem Personenkraftwagen nach Fig. 3.

Fig. 5 den Verflauf der Luftströmung bei dem Personenkraftwagen nach Fig. 3. verdeutlicht durch Strömungslinien,

Fig. 6 durch die Luftströmung hervorgerufene Druckverteilungen und dadurch veruraschte Drücke und Kräfte an dem Personenkraftwagen nach Fig. 3,

Fig. 7 einen Teil des Hecks eines dritten Personenkraftwagens in einem Längsschnitt,

Fig. 8 einen Teil des Hecks eines vierten Personenkraftwagens in einem Längsschnitt,

Fig. 9 bis Fig. 11 einen Teil des Hecks eines fünften Personenkraftwagens jeweils in einem Längsschnitt bei unterschiedlichen Beladungszuständen des Fahrzeugs,

Fig. 12 den hinteren Teil eines sechsten Personenkraftwagens in einem Längsschnitt,

Fig. 13 eine Teiluntersicht des Personenkraftwagens nach Fig. 12,

Fig. 14 einen Teil des Hecks eines siebten Personenkraftwagens in einem Längsschnitt,

Fig. 15 bis Fig. 19 mehrere Wirbelgenerator-Ausführungsformen,

Fig. 20 einen Teil des Hecks eines achten Personenkraftwagens in einem Längsschnitt,

Fig. 21 einen Teil des Luftleitflügels nach Fig. 20 in perspektivischer und Schnitt-Darstellung,

Fig. 22 einen Schnitt nach der Linie 22-22 der Fig. 21,

Fig. 23 und Fig. 24 einen Teil des Hecks eines neunten Personenkraftwagens jeweils in einem Längsschnitt in unterschiedlichen Stellungen sowie

Fig. 25 und Fig. 26 einen Teil des Hecks eines zehnten Personenkraftwagens jeweils in einem Längsschnitt ebenfalls in unterschiedlichen Stellungen.

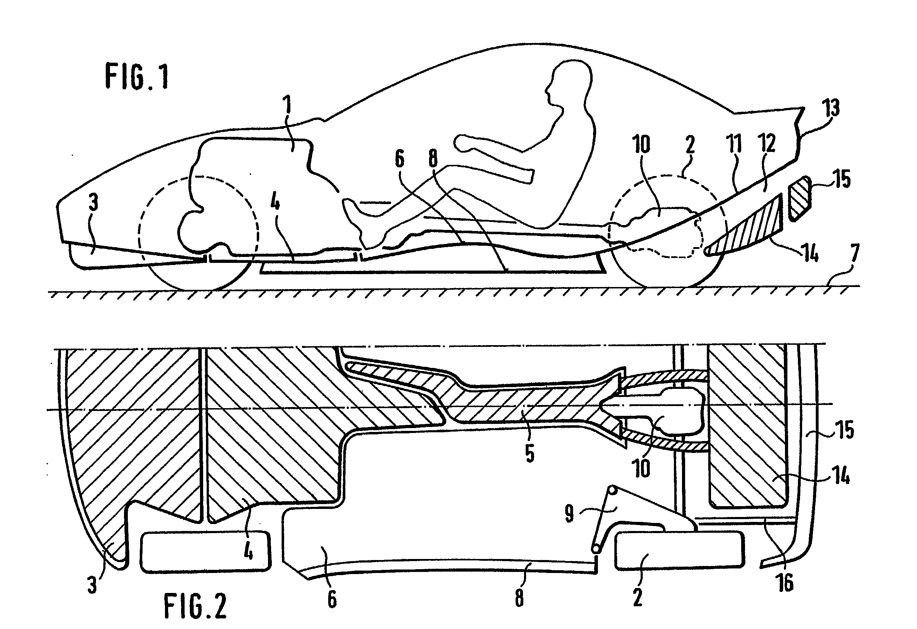

Der erste Personenkraftwagen nach Fig. 1 und 2 ist als sportliches zweisitziges Fahrzeug ausgebildet. Es weist zwei Fahrzeugachsen mit jeweils zwei Fahrzeugrädern auf. Der Fahrzeugmotor 1 ist vorne angeordnet, der Fahrzeugantrieb erfolgt über die Fahrzeug-Hinterräder 2. Der Personenkraftwagen weist eine weitgehend strömungsgünstige Gestaltung auf. Um eine möglichst ungestörte Zuströmung der unter das Fahrzeug gelangenden Luft zu erreichen, ist eine gerundete Venturi-Bugschürze 3 vorgesehen. Diese kann starr mit großem Bodenabstand, elastisch mit geringerem Bodenabstand oder z.B. in Abhängigkeit von der Fahrgeschwindigkeit oder von der Beladung des Fahrzeugs geregelt oder gesteuert mit veränderbarem Bodenstand am Fahrzeugaufbau befestigt sein. Sie kann einen aerodynamischen Abtrieb erzeugen. Zur Erzielung einer günstigen Fahrzeug-Unterströmung ist im Anschluß an das hintere Ende der Venturi-Bugschürze 3 eine weitgehend glattflächige untere Abdeckung 4 für den Motor- und Getrieberaum vorgesehen. Die Austrittsöffnungen für die Motorkühlluft sind so angeordnet, daß eine Störung der Unterströmung durch die austretende Kühlluft weitgehend vermieden wird. Im Anschluß an das hintere Ende der unteren Abdeckung 4 und deren seitlichen Enden ist beiderseits der Auspuffanlage 5, die sich etwa in Fahrzeuglängsmittelebene erstreckt, ein ebenfalls weitgehend glattflächiger Zentralboden 6 angeordnet, der zur Hervorrufung von Unterdruck eine leichte konkave Wölbung zur Fahrzeuginnenseite hin aufweist und vor dem Bereich der Hinterachsaufhängung mit seinem bodennahen Bereich etwa den gleichen Abstand von der die Fahrzeug-Aufstandsfläche bildenden Fahrbahn 7 wie die untere Abdeckung 4 aufweist. Statt der gewölbten Ausbildung des Zentralbodens 6 kann ein ebener Zentralboden vorgesehen sein. Um eine Austauschströmung zwischen der Fahrzeug-Unterströmung und den seitlichen Fahrzeugumströmungen weitgehend zu verhindern, sind an den Fahrzeugseiten nach unten ragende Schwellerschürzen 8 angeordnet, die einen möglichst geringen Bodenabstand aufweisen. Die Ausfpuffanlage 5 ist mit Auspuffleitungen, Schalldämpfer, Katalysator und Brandschutzabdeckung so gestaltet, daß die Fahrzeug-Unterströmung weitgehend ungestört bleibt. Die Bauteile der Hinterradaufhängung 9 sind im Bereich der Anlenkungen abgedeckt und durch Formgebung oder durch Verkleidungsteile strömungsgünstig gestaltet. Auch das Hint erachsgetriebegehäuse 10 ist im Bereich seiner Kühlrippen strömungsgünstig gestaltet.

Der Zentralboden 6 geht an seinem hinteren Ende im Bereich vor der Hinterachsaufhängung in einem Heckboden 11 über, der von seinem vorderen Ende an zum hinteren Fahrzeugende hin ansteigt und im wesentlichen glattflächig ausgebildet ist. Der Übergang zwischen dem Zentralboden 6 und dem Heckboden 11 erfolgt allmählich und ist zur Vermeidung von Strömungsablösungen gut gerundet ausgebildet. Der Heckboden 11 bildet die Oberseite eines Heckdiffusors 12, dessen Unterseite von der Fahrbahn 7 gebildet ist. Der Heckdiffursor 12 kann als Venturidüse gestaltet sein. Hinter dem Übergangsbereich, in welchem der Heckboden 11 an den Zentralboden 6 anschließt, ist der Heckboden 11 weitgehend eben gestaltet und weist eine gleichbleibende Steigung auf. Das hintere Ende des Heckbodens 11 schließt an das untere Ende der Heckabschlußwand 13 an, die etwa senkrecht angeordnet ist. Das hintere Ende des Heckbodens 11 weist dabei einen Bodenstand auf, der etwa viermal so groß wie der Bodenabstand der Zentralbodens 6 in dessen hinterem Bereich ist. Der Bodenabstand des hinteren Endes des Heckbodens 11 ist ferner etwa ebenso groß wie der Durchmesser der Fahrzeug-Hinterräder 2.

In dem Raum unterhalb des Heckbodens 11 ist ein Luftleitflügel 14 angeordnet, der einen derartigen Querschnitt aufweist, daß an seiner Unterseite bei Anströmung vom Fahrzeugbug her Unterdruck und damit Abtriebskraft erzeugt wird (umgedrehtes Tragflügelprofil). Der Luftleitflügel 14 dient zudem als Luftleiteinrichtung für die Luft, die durch den Kanal zwischen der Unterseite des Heckbodens 11 und der Oberseite des Luftleitflügels 14 strömt, auf den dabei Druck und damit ebenfalls Abtriebskraft wirkt. Der Luftleitflügel 14 weist in senkrechter Projektion eine etwa rechteckige Gestalt auf (Fig. 2). Er ist in einer derartigen Höhe über der Fahrbahn 7 angeordnet, daß seine Unterseite an der tiefsten Stelle wenigstens den gleichen Bodenabstand wie der Zentralboden 6 in seinem hinteren Bereich aufweist. Etwa den gleichen Bodenabstand weist auch die untere Abdeckung 4 unterhalb des Fahrzeugmotors 1 auf. Mit seinem vorderen Ende ragt der Luftleitflügel 14 in den Raum zwischen den beiden Fahrzeug-Hinterrädern 2, und zwar etwa mit seinem vorderen Drittel. Bei Frontantriebs-Varianten kann der Luftleitflügel bis etwa zur Vorderkante des Hinterrades geführt werden.

Hinter dem Luftleitflügel 14 ist mit einem Spaltabstand der hintere Stoßfänger 15 angeordnet, dessen Lage am Fahrzeug durch gesetzliche Bestimmungen festgelegt ist. Der hintere Stoßfänger 15 bildet dabei mit seinem Teil, der hinter dem Luftleitflügel 14 angeordnet ist, eine Fortsetzung der Luftleiteinrichtung. Er befindet sich mit Abstand unterhalb des hinteren Endes des Heckbodens 11 und ist mit seitlichen Armen 16 am Fahrzeugaufbau befestigt, an dem auch der Luftleitflügel 14 mit nicht dargestellten Streben befestigt ist.

Bei dem erfindungsgemäßen Fahrzeug wird im Unterbodenbereich im wesentlichen über die gesamte Fahrzeuglänge hinweg eine weitgehend ungestörte Strömung erreicht. Diese ermöglicht eine gute Bodenhaftung. Der Heckdiffusor 12 und die Luftleiteinrichtung, die von dem Luftleitflügel 14 und dem hinteren Stoßfänger 15 gebildet ist, sind derart aufeinander abgestimmt, daß die Strömung in den Heckdiffusor hinein und die Strömung aus dem Heckdiffusor hinaus ungestört erfolgt und ein größtmögliches Maß an Abtriebskraft an dem verhältnismäßig leichten hinteren Ende des Fahrzeugs geliefert wird. Dabei ist berücksichtigt, daß der Bodenabstand des Fahrzeugaufbaus in Abhängigkeit von der Beladung des Fahrzeugs und den jeweiligen Fahrverhältnissen veränderbar ist und die Bodenkontur in dem Übergangsbereich zwischen dem Zentralboden 6 und dem Heckboden 11 und die Abströmtangente dieses Übergangsbereichs auf eine Optimalzuströmung zu dem Luftleitflügel 14 hin auszulegen sind, so daß trotz unterschiedlicher Zuströmung die Funktion des Heckdiffusors 12 und des Luftleitflügels 14 auch bei Extremlagen des Fahrzeugaufbaus stets gewährleistet ist. Um eine möglichst gleichbleibende und zudem möglichst geringe Höhenlage des Fahrzeugaufbaus zu erreichen, kann es vorteilhaft sein, eine Niveauregulierung zumindest an der Hinterachse einzusetzen.

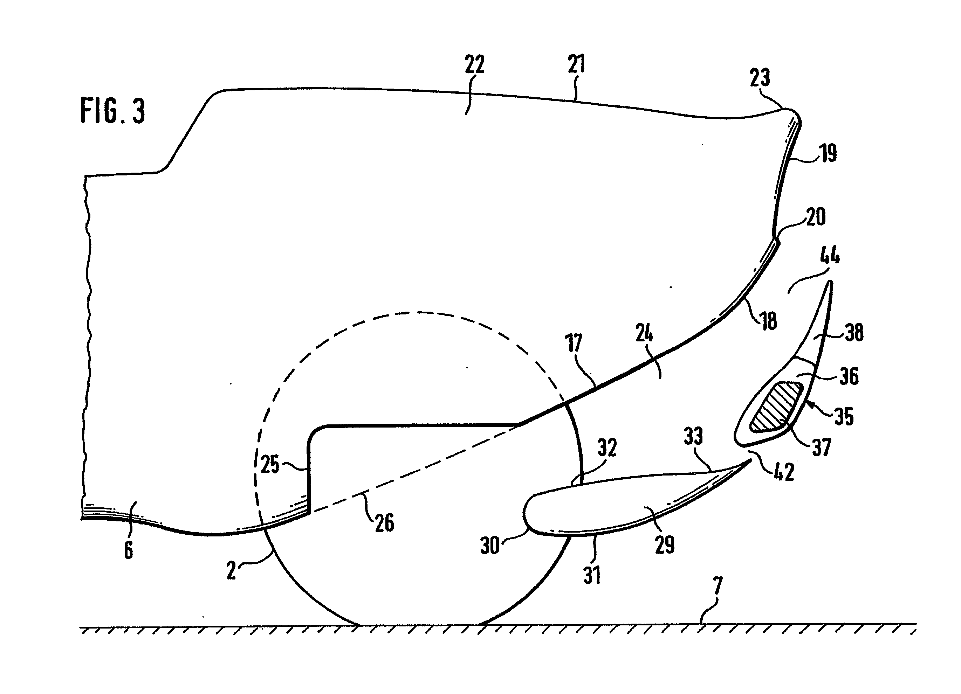

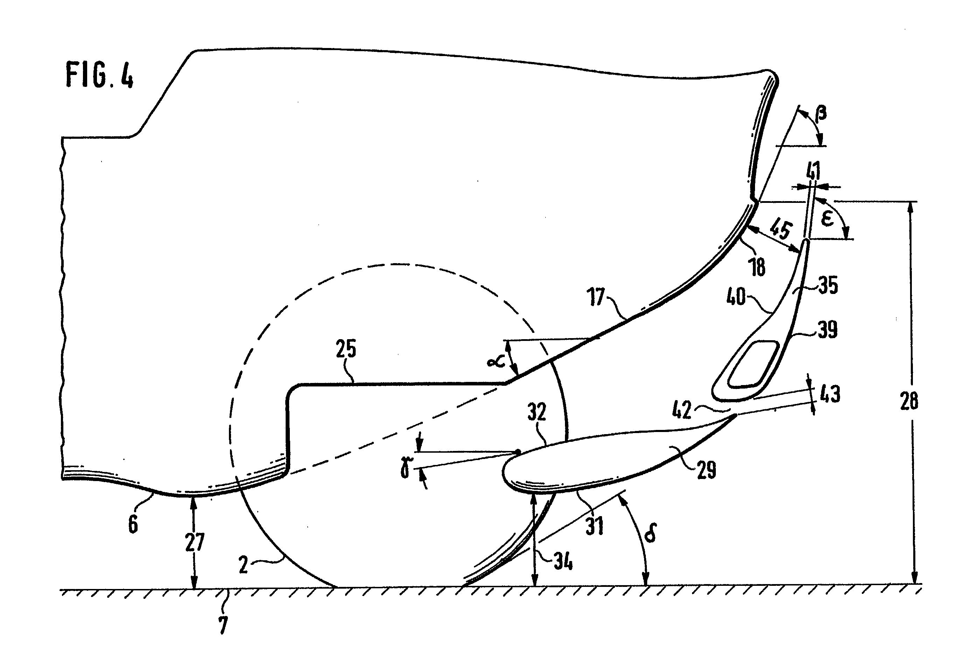

Der zweite Personenkraftwagen nach Fig. 3 bis 6 unterscheidet sich von dem ersten Personenkraftwagen nach Fig. 1 und 2 insbesondere durch den hinteren Bereich des Heckbodens und die Getaltung des Luftleitflügels und des hinteren Stoßfängers.

Nach Fig. 3 bis 6 ist der Heckboden 17 in seinem hinteren Bereich nicht eben, sondern leicht konvex gekrümmt ausgebildet, so daß ein ausgerundeter Diffusorabschluß 18 gebildet ist. Das hintere Ende des Heckbodens 17 schließt an das untere Ende der Heckabschlußwand 19 an, die in ihrem unteren Bereich leicht konkav gekrümmt ausgebildet ist, so daß an dem hinteren Ende des Heckbodens 17 eine Abreißkante 20 gebildet ist. Der Übergang zwischen der Heckabschlußwand 19 und der oberen Wand 21 des Fahrzeughecks 22 ist als Heckspoiler 23 ausgebildet. Im Bereich der nicht dargestellten Fahrzeug-Hinterachse ist der Heckboden 17 zumindest über einen Teil der Fahrzeugbreite hinweg nach oben gezogen, um Platz für die beweglichen Fahrwerks-Antriebsteile einer angetriebenen Hinterachse zu schaffen. Der Heckdiffusor 24 weist in diesem Bereich durch die Aussparung 25 zwar eine Störung auf, wird in seiner Gesamtfunktion abe nicht ausschlaggebend beeinträchtigt. Bei einem Frontantriebsfahrzeug kann in Abweichung hiervon der Heckboden auch im Bereich der nicht angetriebenen Fahrzeug-Hinterachse im wesentlichen über die gesamte Fahrzeugbreite hinweg oberhalb der Fahrzeug-Hinterachse als Oberseite ders Heckdiffusors von ihrem vorderen Bereich bis zu ihrem hinteren Bereich stetig verlaufen. Dies ist durch eine gestrichelte Linie 26 verdeutlicht.

Am vorderen Ende des Heckbodens 17, an dem dieser in den Zentralboden 6 übergeht, weist der Heckboden 17 einen Abstand 27 von der Fahrbahn 7 auf, der allerdings nicht konstant, sondern in Abhängigkeit von der Beladung des Fahrzeugs und den momentanen Fahrverhältnissen veränderbar ist. Hinter dem Übergangsbereich zwischen dem Zentralboden 6 und dem Heckboden 17 weist der schräg nach hinten ansteigende Heckboden in seinem mittleren Bereich eine im wesentlichen gleichbleibende Steigung auf. Der von dem mittleren Bereich des ansteigenden Heckbodens 17 und der Waagerechten eingeschlossene Neigungswinkel $\alpha$ beträgt etwa 25°, kann aber bei anderer Ausführung auch andere Werte zwischen etwa 10° und etwa 40° annehmen. Im hinteren Bereich des Heckbodens 17, in dem dieser konvex gekrümmt ist, nimmt die Steigung allmählich zu. Die an das hintere Ende des Heckbodens 17 angelegte Tangente schließt mit der Waagerechten einen Neigungswinkel $\beta$ von etwa 70° ein. Dieser Winkel kann bei anderen Ausführungsformen aber auch andere Werte, z.B. zwischen etwa 40° und etwa 90°, annhemen. Das hintere Ende des Heckbodens 17, an welchem die Abreißkante 20 gebildet ist, weist einen Abstand 28 von der Fahrbahn 7 auf, der mehr als viermal so groß wie der Abstand 27 des vorderen Endes des Heckbodens 17 von der Fahrbahn 7 und etwa ebenso groß wie der Durchmesser der Fahrzeug-Hinterräder 2 ist.

Als Luftleitflügel 29 ist ein Strömungskörper vorgesehen, dessen Vorderteil 30 zur Gewährleistung einer ablösungsfreien Umströmung des Luftleitflügels 29 gut gerundet ausgebildet ist. Die Unterseite 31 des Luftleitflügels 29 ist konvex gekrümmt und bildet die Unterdruck- oder Saugseite des Luftleitflügels 29. Die Oberseite 32 des Luftleitflügels 29 ist weitgehend eben ausgebildet, kann aber auch leicht konvex gestaltet sein. Sie bildet die Druckseite des Luftleitflügels 29. Am hinteren Ende des Luftleitflügels 29 weist dessen Oberseite 32 eine flache konkave Ausnehmung 33 auf. Das hintere Ende Luftleitflügels 29 endet etwa keilförmig.

Der Luftleitflügel 29 ist im wesentlichen flach angeordnet. Er steigt geringfügig von vorne nach hinten an. Der von dem vorderen Bereich der Oberseite 32 des Luftleitflügels 29 mit der Waagerechten eingeschlossene Winkel α beträgt etwa 10°, kann bei anderen Ausführungsformen aber auch andere Werte etwa zwischen 5° und 30° annehmen. Der Anstellwinkel ist so zu wählen, daß sich an der Unterseite 31 des Luftleitflügels 29 ein maximaler Unterdruck ergibt. Die Unterseite 31 des Luftleitflügels 29 weist an ihrer tiefstgelegenen Stelle einen Abstand 34 von der Fahrbahn 7 auf, der mindestens ebenso groß wie der Abstand 27 ist, den das vordere Ende des Heckbodens 17 von der Fahrbahn 7 aufweist, so daß ein Aufsetzen des Luftleitflügels 29 auf dem Erdboden wegen zu geringer Bodenfreiheit ausgeschlossen ist. Der Luftleitflügel 29 ist außerdem derart angeordnet, daß ein Grenzböschungswinkel δ oberhalb der Fahrbahn 7 frei bleibt. Der Luftleitflügel 29 ragt etwa mit seinem vorderen Drittel in den Raum zwischen den beiden Fahrzeug-Hinterrädern 2. Er ist unterhalb der hinteren Hälfte des mittleren Bereichs des Heckbodens 17 angeordnet. Seine Vorderkante liegt etwa unterhalb des hinteren Endes der Aussparung 25.

Dem Luftleitflügel 29 ist ein Nachflügel 35 nachgeschaltet, so daß der Luftleitflügel 29 als Hauptflügel wirkt. Tragender Bestandteil des Nachflügels 35 ist der hintere Stoßfänger 36, der eine Stoßfängerkern 37 aufweist und in dem Bereich hinter dem Luftleitflügel 29 in etwa über die Breite des Luftleitflügels 29 hinweg mit einem nach oben ragenden zungenartigen Luftleitansatz 38 versehen ist. Der hintere Stoßfänger 36 ist in dem Bereich hinter dem Luftleitflügel 29, in welchem er Bestandteil des Nachflügels 35 ist, gemeinsam mit dem Luftleitansatz 38 ebenfalls als Tragflügelprofil gestaltet, so daß bei Anströmung von Fahrzeugbug her auch an dem Nachflügel 35 Abtriebskraft wirksam wird. Der Nachflügel 35 ist im wesentlichen steil angeordnet. Seine Rückseite 39 ist konvex gekrümmt ausgebildet. Seine Vorderseite 40 ist im unteren Bereich konvex und im oberen Bereich konkav gekrümmt ausgebildet. Der obere Bereich des Nachflügels 35 weist demgemäß eine nur geringe Verjüngung auf. Er endet im wesentlichen stumpf. Am hinteren Ende sollte der Nachflügel 35 möglichst dünn ausgebildet sein. Praktisch ausführbar ist eine Dicke 41 von etwa 10 mm bis 60 mm. Mit der Waagerechen schließt der hintere Bereich des Nachflügels 35 einen Abströmwinkel ε von etwa 80° ein. Dieser Winkel kann bei anderen Ausführungsformen optimale Werte zwischen etwa 50° und etwa 90° annehmen. Die Länge des Nachflügels 35 in Strömungsrichtung beträgt etwa 80% derjenigen des Luftleitflügels 29, kann aber auch andere Werte annehmen, beispielsweise zwischen 30% und 80% der Länge des Luftleitflügels betragen.

Der Nachflügel 35 ist schräg unter und hinter dem hinteren Bereich des Heckbodens 17 angeordnet. Sein vorderes Ende befindet sich oberhalb des hinteren Endes des Luftleitflügels 29. Zwischen dem hinteren Ende des Luftleitflügels 29 und dem vorderen Ende des Nachflügels 35 ist ein Durchströmspalt 42 vorhanden, dessen Spaltbreite 43 in Höhenrichtung etwa 10 mm bis 60 mm beträgt. Die Unterseite 31 des Luftleitflügels 29 und die Rückseite 39 des Nachflügels 35 bilden zumindest annähernd einen nur durch den Durchströmspalt 42 unterbrochenen stetigen Kurvenzug. Der hintere Bereich des Luftleitflügels 31 ist derart gestaltet, daß die Strömung an der Rückseite 39 des Nachflügels 35 nicht ablöst. Der Luftleitflügel 29 und der Nachflügel 35 wirken gemeinsam als Spaltflügel, bei dem die durch den Durchströmspalt 42 hindurchstömende Luft ein Anliegen der Strömung an der Rückseite 39 des Nachflügels 35 fördert. Der Abstand der von dem Luftleitflügel 29 und dem Nachflügel 35 gebildeten Luftleiteinrichtung von dem Heckboden 17 vergrößert sich von einem Anfangsabstand an vorderen Ende der Luftleitflügels 29 an nach hinten zu, erreicht seinen größten Wert etwa an dem Übergang von dem Luftleitflügel 29 zu dem Nachflügel 35 und verringert sich sodann nach hinten zu wieder auf etwa den Anfangswert. Der hintere Bereich des Heckbodens 17 bildet dabei mit der Vorderseite des Nachflügels 35 eine Düse 44 mit im wesentlichen nach oben und leicht nach hinten gerichteter Ausströmrichtung. Die Ausströmöffnung der Düse 44 kann zwischen dem hinteren Bereich des Heckbodens 17 und der Vorderseite 40 des Nachflügels 35 eine lichte Weite 35 von etwa 30 mm bis 200 mm aufweisen.

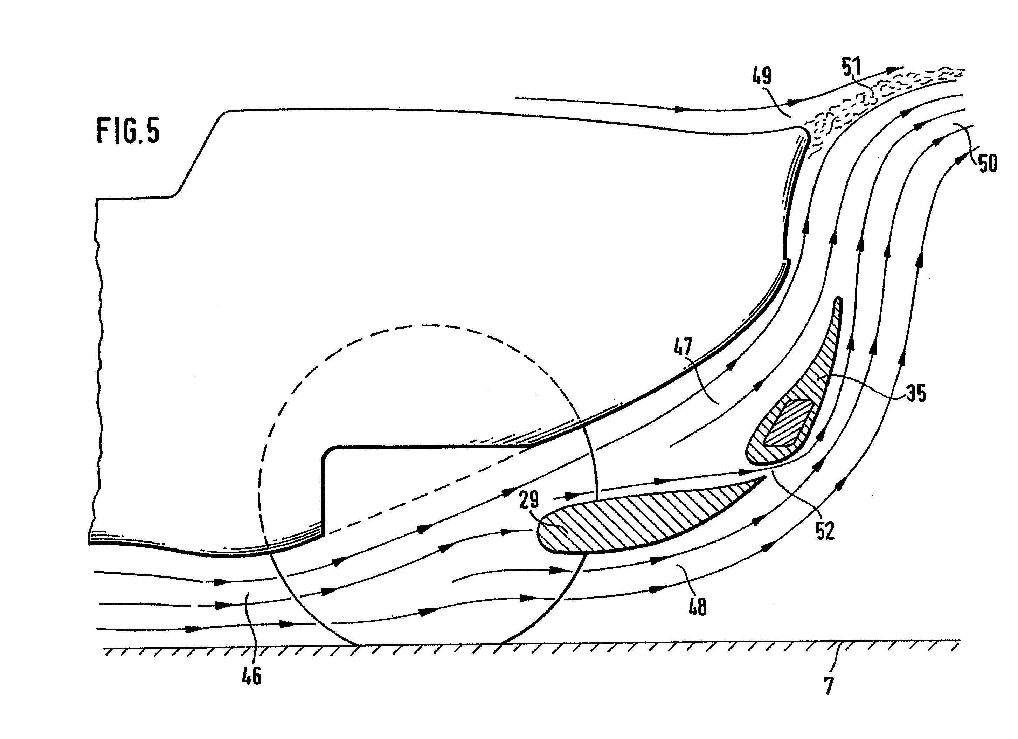

Die vom Fahrzeugbug unterhalb des Fahrzeugs in einem geschlossenen Strom 46 nach hinten strömende Luft teilt sich nach Eintritt in den Heckdiffusor 24 in zwei Teilströme 47, 48 auf (Fig. 5). Der obere Teilstrom 47 druchströmt den Raum zwischen dem Heckboden 17 und der Oberseite 32 des Luftleitflügels 29 und der Vorderseite 40 des Nachflügels 35. Der untere Teilstrom 48 strömt an der Unterseite 31 des Luftleitflügels 29 und an der Rückseite 39 des Nachflügels 35 entlang. Hinter dem Nachflügel 35 verbinden sich die beiden Teilströme 47, 48 wieder und strömen gemeinsam dem oberen Ende des Fahrzeughecks zu, an dem sie auf die an der Fahrzeugoberseite entlang strömende Luftströmung 49 treffen, mit der gemeinsam sie als Summenstrom 50 nach hinten abströmen. An dem oberen Ende des Fahrzeughecks entsteht dabei nur ein vergleichsweise kleines Gebiet abgelöster Strömung 51. Für eine ablösungsarme Umströmung des Nachflügels 35 ist die Spaltströmung 52 durch den Durchströmspalt 42 zwischen dem hinteren Ende des Luftleitflügels 29 und dem vorderen Ende des Nachflügels 35 hindurch von wesentlicher Bedeutung. Sie wird durch die vorstehend beschriebene Formgebung im Bereich des Durchströmspaltes 42 erzwungen.

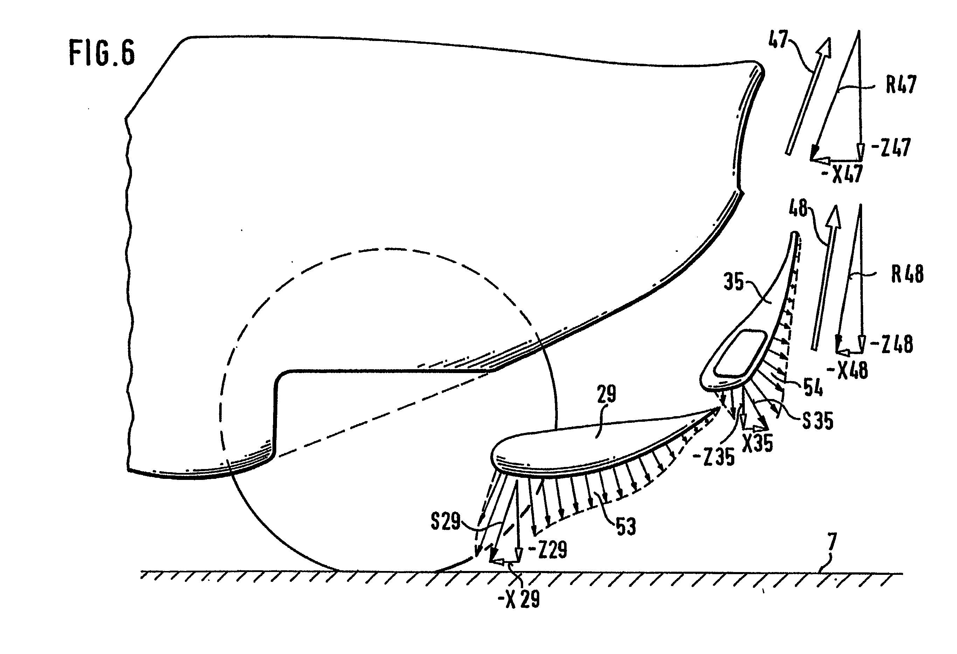

Die Luftströmung bewirkt an der Unterseite 31 des Luftleitflügels 29 eine Druckverteilung 53 und an der Rückseite 39 des Nachflügels 35 eine Druckverteilung 54 gemäß Fig. 6. Dabei sind die sich bei einer bestimmten Anströmung, die sich bei einer bestimmten Fahrgeschwindigkeit ergibt, einstellenden Unterdrücke als Vektoren auf den Flügelkonturen gezeichnet. An den beiden Flügeln 29, 35 stellt sich jeweils eine Sogkraft S29 bzw. S35 ein. Die an dem Luftleitflügel 29 wirksame resultierende Sogkraft S29 kann in eine Abtriebskomponente -Z29 und eine Vortriebskomponente -X29 aufgeteilt werden. In entsprechender Weise kann die an dem Nachflügel 35 wirksame resultierende Sogkraft S35 in eine Abtriebskomponente -Z35 und eine Fahrwiderstandskomponente X35 aufgeteilt werden. Die schräg nach oben und hinten ausströmenden Teilströme 47, 48 erzeugen Reaktionskräfte R47 und R48, die ebenfalls in entsprechende Komponenten -Z und -X aufgeteilt werden können. Die Summe aller -Z-Komponenten ergibt den aerodynamischen Auftrieb bzw. die aerodynamische Abtriebskraft.

In Abweichung von dem dargestellten Ausführungsbeispiel kann eine Luftleiteinrichtung vorgesehen sein, die statt zweier gesonderter Flügel einen einzigen Luftleiteinrichtungsflügel aufweist, der die Funktionen des Hauptflügels und des Nachflügels wahrnimmt. Ein derartiger Luftleiteinrichtungsflügel kann ebenfalls den hinteren Stoßfänger integrieren. Statt des Durchströmspaltes 42 kann ein derartiger Luftleiteinrichtungsflügel Durchströmöffnungen für eine Spaltströmung aufweisen, welche das Anliegen des unteren Teilstroms an der Außenseite des Luftleiteinrichtungsflügels fördert.

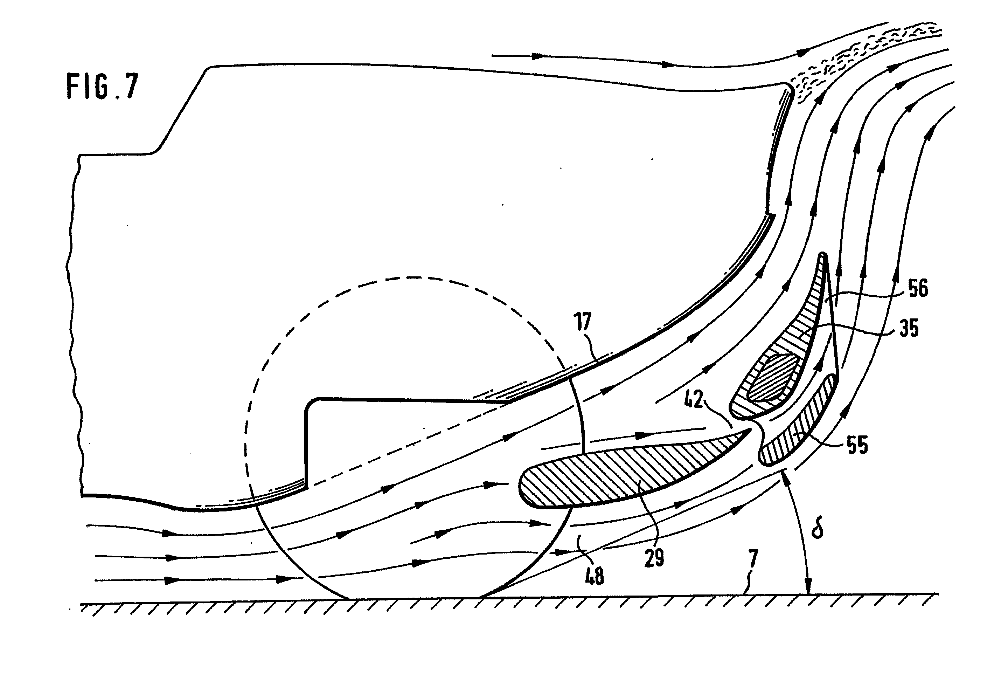

Nach Fig. 7 kann zur Sicherung einer störungsfreien Umlenkung des unteren Teilstroms 48 ein Hilfsflügel 55 vorgesehen sein, der schräg unter und hinter dem Nachflügel 35 mit Abstand von diesem angeordnet ist. Der Hilfsflügel 55 ist mit Armen 56 an dem Nachflügel 35 befestigt und lenkt mit seiner konkav gekrümmten Oberseite die durch den Durchströmspalt 42 zwischen dem Luftleitflügel 29 und dem Nachflügel 35 hindurch tretende Spaltströmung 52 nach oben hin um und fördert durch seine gekrümmte Gesamtgestalt die Umlenkung des unteren Teilstroms 48, der teilweise an der konkav gekrümmten Oberseite und teilweise an der konvex gekrümmten Unterseite des Hilfsflügels 55 entlang strömt. Die aus dem Luftleitflügel 29, dem Nachflügel 35 und dem Hilfsflügel 55 gebildete Luftleiteinrichtung ist dabei derart angeordnet, daß die Bodenfreiheit mindestens so groß wie die des vorderen Bereichs des Heckbodens 17 und außerdem der Grenzböschungswinkel δ freigehalten ist.

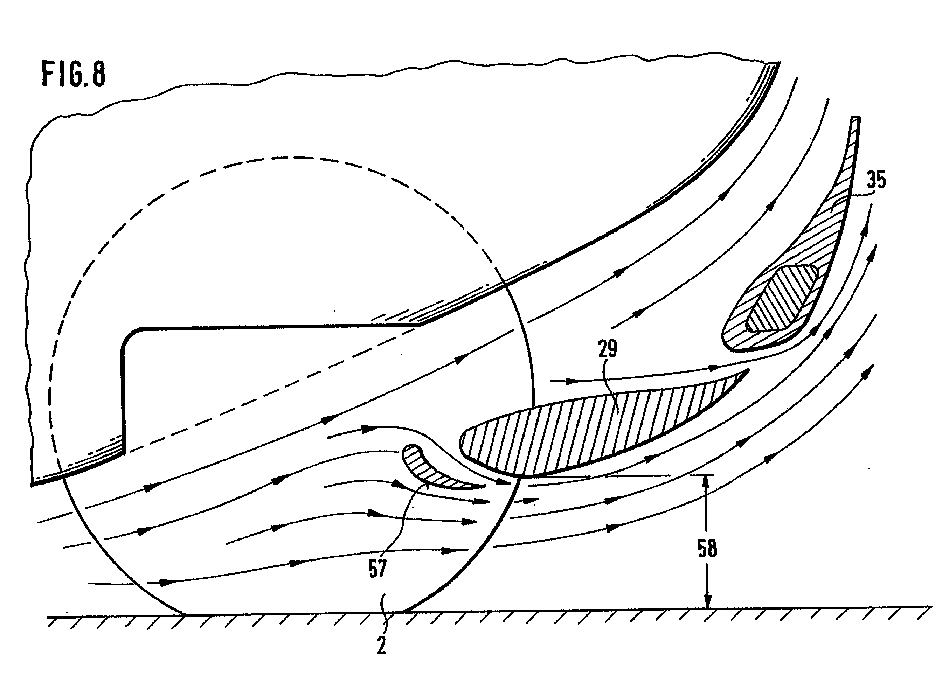

Nach Fig. 8 ist vor dem Luftleitflügel 29 ein Vorflügel 57 angeordnet, der die Aufgabe hat, dem Luftleitflügel 29 ungestörte Zuströmluft aus bodennahen Bereichen zuzuführen. Der Vorflügel 57 ist insgesamt in dem Raum zwischen den beiden Fahrzeug-Hinterrädern 2 angeordnet. In diesem Raum ist es nicht erforderlich, die Bordsteinfreiheit 58 mit einer Höhe von etwa 140 mm bis 160 mm einzuhalten, die für die Luftleiteinrichtung, also insbesondere den Luftleitflügel 29, hinter den Fahrzeug-Hinterrädern 2 zu beachten ist. Je nach den vorgesehenen Einsatzbedingungen des Fahrzeugs kann in dem Raum zwischen den Fahrzeug-Hinterrädern 2 eine kleinere Bodenfreiheit von ca. 80 mm bis 120 mm akzeptiert werden.

In Abweichung von den bisherigen Aufführungsbeispielen, bei denen die Luftleiteinrichtung jeweils starr am Fahrzeugaufbau befestigt ist, wodurch zwar eine stets gleichbleibende Anordnung der Luftleitflügel zu dem Heckboden gegeben ist, sich aber je nach Einfederung unterschiedliche Bodenabstände ergeben, kann vorgesehen sein, daß ein Luftleitflügel in seiner Lage veränderbar am Fahrzeugaufbau gehalten ist, so daß sein Bodenabstand unabhängig von der Einfederung weitgehend konstant gehalten werden kann.

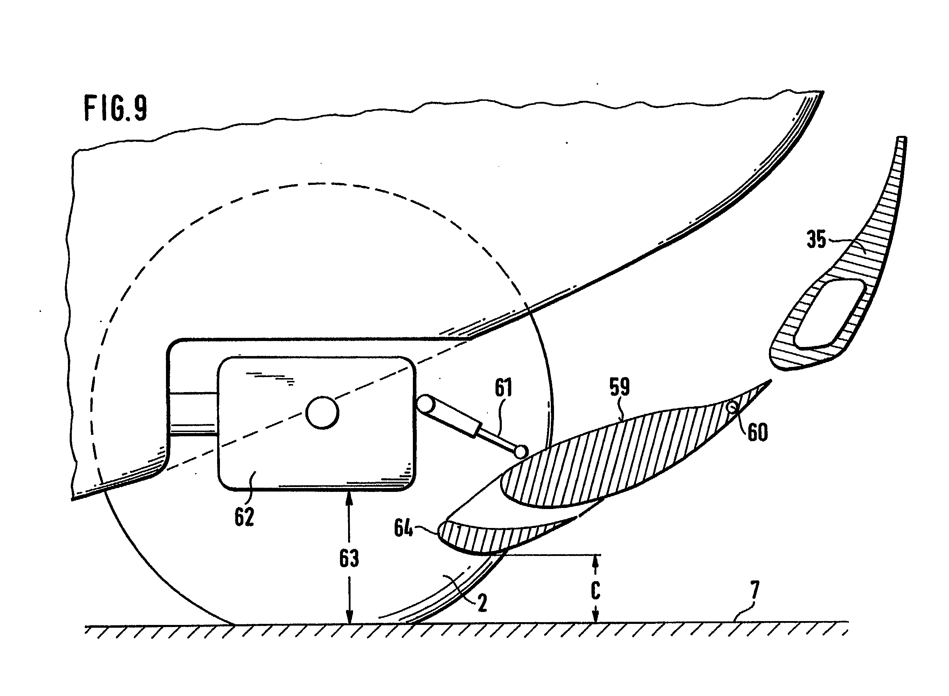

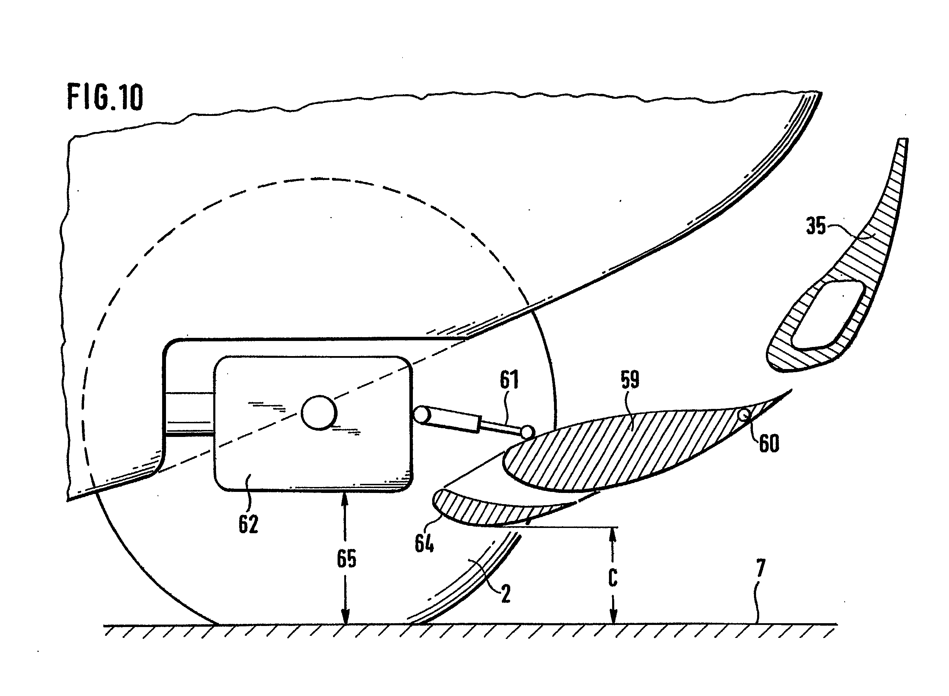

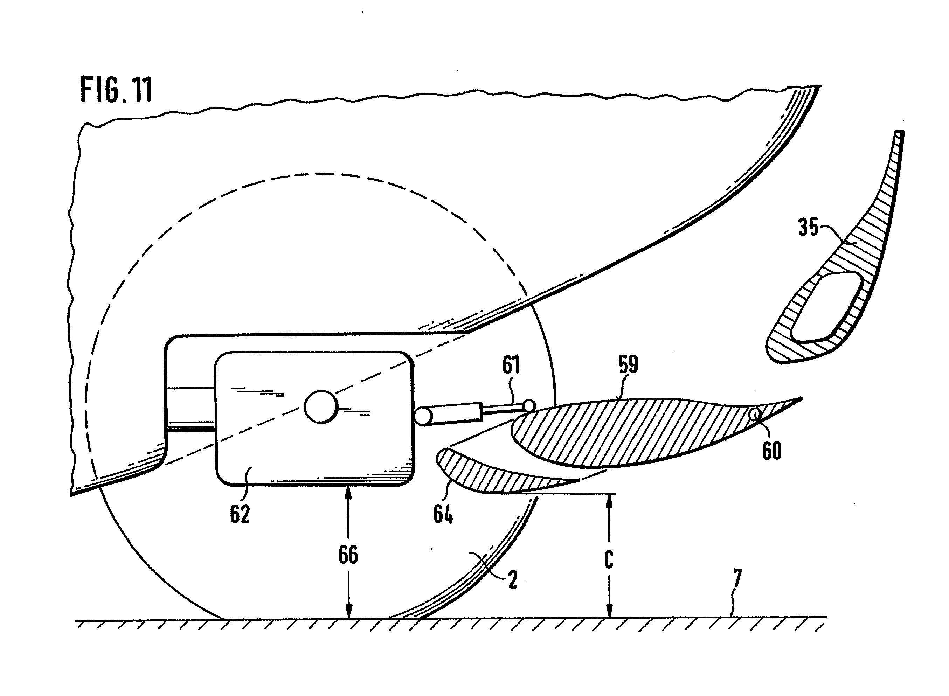

Nach Fig. 9 bis 11 ist vorgesehen, daß ein Luftleitflügel 59 in der Nähe seines hinteren Endes mit einem Schwenklager 60 am Fahrzeugaufbar befestigt ist. In der Nähe des vorderen Endes des Luftleitflügels 59 greift eine Verstelleinrichtung 61 an, die mit einem Hinterachsgetriebegehäuse 62 schwenkbar verbunden ist, aber auch mit einem anderen Aufbauteil verbunden sein kann. In Fig. 9 bis 11 sind drei unterschiedliche Stellungen dargestellt, die sich bei unterschiedlichen Beladungen des Fahrzeugs ergeben. Fig. 9 zeigt die Stellung, die sich einstellt, wenn nur der Fahrer das im übrigen leere Fahrzeug belastet. Der Fahrzeugaufbau ist durch die Hinterachsfedern weitgehend angehoben und das Hinterachsgetriebegehäuse 62 weist die maximale Bodenfreiheit 63 von etwa 200 mm auf. Die Verstelleinrichtung 61 ist ausgefahren, so daß ein an dem Luftleitflügel 59 befestigter Vorflügel 64 in dem Raum zwischen den Fahrzeug-Hinterrädern 2 eine Bodenfreiheit C von 120 mm aufweist. Fig. 10 zeigt eine mittlere Stellung, bei welcher das Fahrzeug einer mittlere Last trägt, z.B. ein fünfsitziger Personenkraftwagen mit drei Personen besetzt ist. Bei dieser Beladung weist das Hinterachsgetriebegehäuse 62 nur noch einen mittleren Bodenabstand 65 von etwa 160 mm auf. Die Verstelleinrichtung 61 ist etwas eingefahren, so daß die Bodenfreiheit C des Vorflügels 64 unverändert beibehalten ist. Fig. 11 zeigt den Zustand bei höchstzulässiger Beladung des Fahrzeugs. Das Hinterachsgetriebegehäuse 62 weist bei diesem Beladungszustand nur noch einen minimalen Bodenabstand 66 von etwa 120 mm auf. Die Verstelleinrichtung 61 hat eine weitere Verschwenkung des Luftleitflügels 59 samt starr an diesem befestigtem Vorflügel 64 bewirkt, so daß auch bei diesem Beladungszustand die Bodenfreiheit C des Vorflügels 64 beibehalten ist.

Die Schwenkverstellung des Luftleitflügels 59 kann sowohl gesteuert als auch in Abhängigkeit von der statischen Einfederung geregelt erfolgen. Außerdem kann die Verstelleinrichtung derart ausgelegt sein, daß zusätzlich sich während der Fahrt ergebende dynamische Höhenänderungen berücksichtigt werden und der Luftleitflügel 59 bzw. sein Vorflügel 64 stets weitgehend die gleiche Bodenfreiheit beibehält. Anders als bei dem gezeigten Ausführungsbeispiel kann das vordere Ende des Luftleitflügels statt mit dem Fahrzeugaufbau mit einem radfesten Bauteil verbunden sein, so das stets ein konstanter vorgegebener Bodenabstand eingehalten wird. Statt einer Schwenklagerung kann eine translatorische Verlagerung der Luftleiteinrichtung vorgesehen sein.

Durch die Verstellbarkeit des Luftleitflügels 59 mit dem Vorflügel 64 wird in vorteilhafter Weise erreicht, daß unabhängig von der jeweiligen momentanen Höhenlage des Fahrzeugaufbaus stets Luft aus möglichst bodennahen Bereichen von der Luftleiteinrichtung erfaßt wird, so daß von der unter dem Fahrzeug entlang strömenden Luft ein möglichst großer Anteil in den Raum zwischen der Luftleiteinrichtung, die aus dem Vorflügel 64, dem Luftleitflügel 59 und dem Nachflügel 35 gebildet ist, und dem Heckboden 17 gelangt. Außerdem bewirkt die Verstellbarkeit des Luftleitflügels 59 mit dem Vorflügel 64, daß die Gesamtgestalt der Luftleiteinrichtung sich dem jeweiligen Abstand des Heckbodens 17 von der Fahrbahn 7 in günstiger Weise anpaßt. Anders als bei dem dargestellten Ausführungsbeispiel kann die Verstellung auch in der Weise erfolgen, daß nicht ein konstanter Bodenabstand des Vorflügels 64 bzw. des Luftleitflügels 59 eingehalten wird, sondern der Bodenabstand des Luftleitflügels von einem geringsten Wert, der bei der niedrigsten Höhenlage des Fahrzeugaufbaus gegeben ist, ausgehend mit zunehmender Höhenlage des Fahrzeugaufbaus in Abhängigkeit von dieser ebenfalls größer wird, jedoch in geringerem Maße als die Höhe des Fahrzeugaufbaus zunimmt, z.B. sich proportional zu dieser ändert.

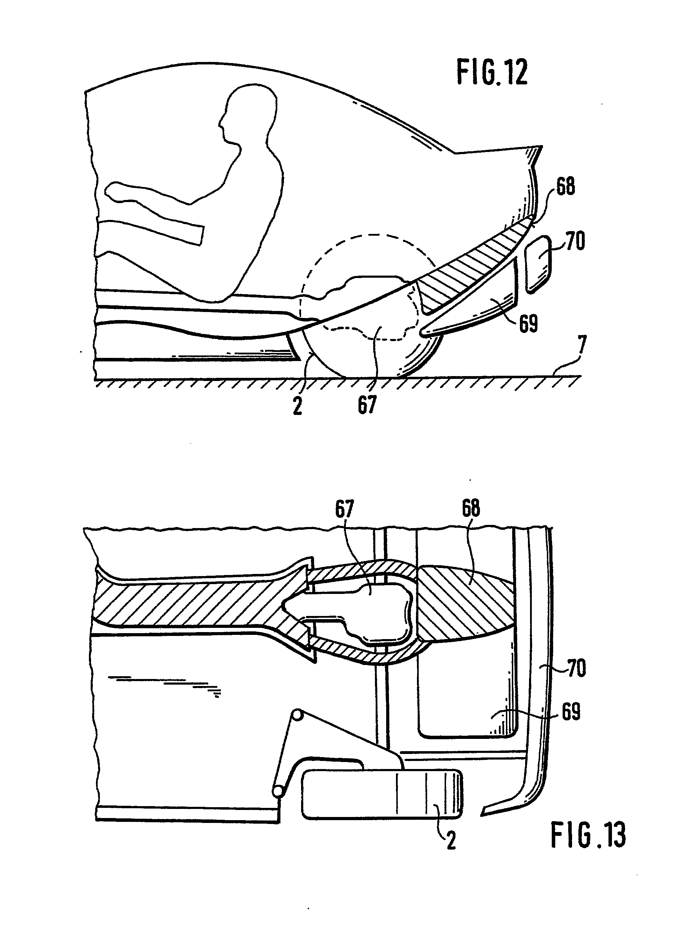

Nach Fig. 12 und 13 ist in dem Raum hinter einem Hinterachsgetriebegehäuse 67 ein strömungsgünstig gestalteter Verdrängungskörper 68 an der Unterseite des Fahrzeugaufbaus oberhalb eines Luftleitflügels 69 vorgesehen, dem ein Nachflügel 70 nachgeschaltet ist. Durch den Verdrängungskörper 68 wird erreicht, daß Störungen der Luftströmung, die durch das Hinterachsgetriebegehäuse 67 verursacht werden könnten, weitgehend vermieden werden, so daß die Wirksamkeit der Luftleiteinrichtung weitgehend ungestört gewährleistet ist. Der Verdrängungskörper 68 kann gleichzeitig als Bestandteil der Auspuffanlage, beispielsweise als Nachschalldämpfer, oder als Bestandteil eines Kofferraumes ausgebildet sein, in dem er eine muldenförmige Vertiefung bilden kann.

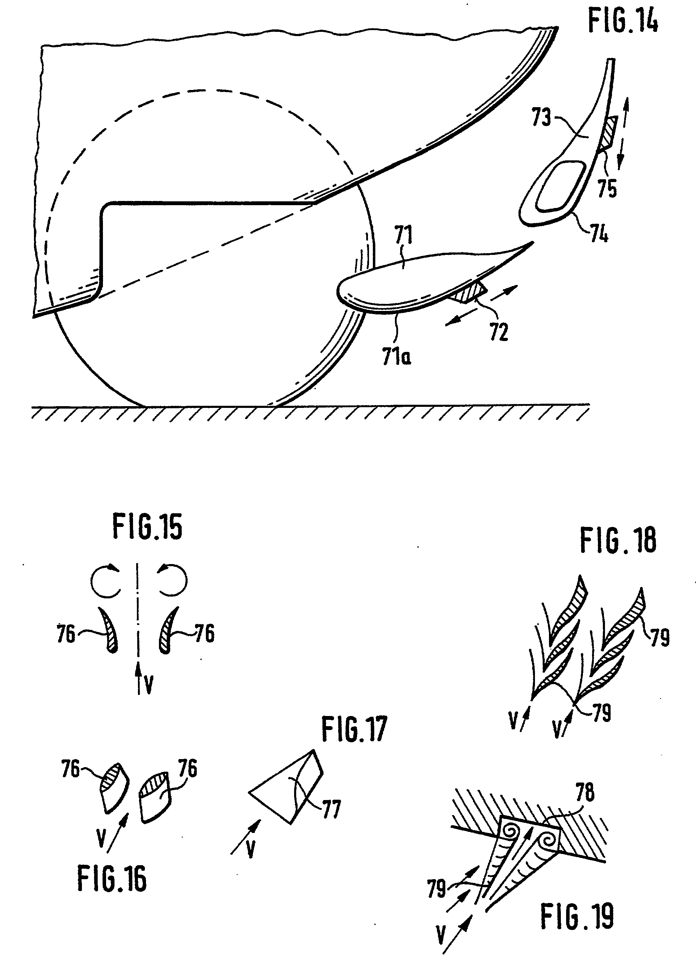

Bei dem Ausführungsbeispiel nach Fig. 14 sind an einem Luftleitflügel 71 Wirbelgeneratoren 72 angeordnet, und zwar an der Unterseite 71 a des Luftleitflügels 71 etwa ein Drittel der Länge des Luftleitflügels 71 von dem hinteren Ende des Luftleitflügels 71 entfernt. In entsprechender Weise ist ein dem Luftleitflügel 71 nachgeschalteter Nachflügel 73 an seiner Rückseite 74 mit Wirbelgeneratoren 75 versehen, und zwar geringfügig oberhalb der Mitte der Rückseite 74. Die Wirbelgeneratoren 72, 75 bringen im Bereich ablösungsgefährdeter Strömung der wandnahen Strömung energiereiche Außenströmung zu. Hierdurch wird eine Strömungsablösung verhindert oder zumindest vermindert.

Fig. 15 bis 19 verdeutlichen einige Ausführungsformen derartiger Wirbelgeneratoren, sogenannte Vortex-Generatoren. Die Anströmrichtung ist jeweils durch einen Pfeil V angegeben.

Nach Fig. 15 sind symmetrisch zur Strömungsrichtung mit Abstand voneinander kleine tragflügelförmige Profile 76 vorgesehen, die senkrecht auf der konvexen umströmten Flügelseite stehen und von dieser wegweisen.

Nach Fig. 17 ist als Wirbelgenerator ein etwa tetraederförmiger Körper 77 vorgesehen.

Nach Fig. 18 und 19 ist die umströmte Flügelseite mit einer Ausnehmung 78, die in Strömungsrichtung verläuft, versehen, in welcher kleine Leitflügel 79 angeordnet sind, welche eine Wirbelung der Strömung in den Ausnehmungsgrund hinein bewirken.

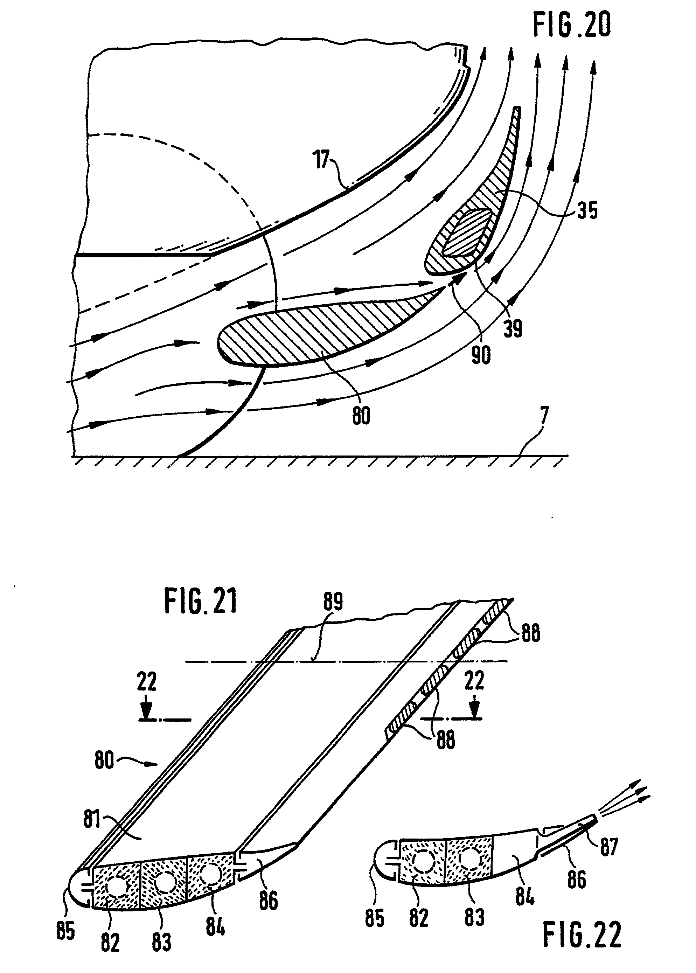

Bei dem Ausführungsbeispiel nach Fig. 20 bis 22 ist ein Luftleitflügel 80 als Teil der Auspuffanlage, nämlich als Nachschalldämpfer, ausgebildet. Die Schalldämpfung erfolgt in dem in Anströmrichtung mittleren Teil 81 des Luftleitflügels 80. In diesem Teil des Luftleitflügels 80 sind eine vordere Dämpferkammer 82, eine mittlere Dämpferkammer 83 und eine hintere Dämpferkammer 84 angeordnet, die sich jeweils quer zur Anströmrichtung annähernd über die gesamte Länge des Luftleitflügels 80 erstrecken, die gesamte Höhe des mittleren Teils 81 des Luftleitflügels 80 einnehmen und aneinander angrenz en. Der in Anströmrichtung vordere Teil des Luftleitflügels 80 ist als Nasenkappe 85 strömungsgünstig ausgebildet. Der hintere Teil 86 des Luftleitflügels 80 ist ebenfalls strömungsgünstig gestaltet und dient gleichzeitig als Strahlungsschutzabdeckung. Die Auspuffendleitung 87 ragt von der hinteren Dämpferkammer 84 aus durch den hinteren Teil 86 des Luftleitflügels 80 hindurch und mündet in dem quer zur Anströmrichtung mittleren Bereich des Luftleitflügels 80 mit vier Auspufföffnungen 88, die symmetrich zu der in Anströmrichtung verlaufenden Mittellinie 89 des Luftleitflügels 80 angeordnet sind, in der Hinterkante des Luftleitflügels 80. Die Auspufföffnungen 88 weisen jeweils in Fahrzeugquerrichtung eine Ausdehnung auf, die mehrmals so groß wie die Öffnungsausdehnung in Höhenrichtung ist. Die Auspuffendleitung 87 ist mit ihren Auspufföffnungen 88 auf den unteren Bereich der Rückseite 39 des Nachflügels 35 hin ausgerichtet, der dem Luftleitflügel 80 nachgeschaltet ist. Die Strömungsrichtung der Auspuffgase ist durch einen Pfeil 90 in Fig. 20 angedeutet.

Durch diese Ausbildung wird erreicht, daß der Luftleitflügel 80 gleichzeitig mehrere Funktionen erfüllt, wodurch sich eine bauliche Vereinfachung des Fahrzeugs ergibt. Darüber hinaus wird erreicht, daß auch die Auspuffgase, die mit hoher Geschwindigkeit an der Unterdruckseite des Nachflügels 35 in Konturnähe entlang geführt werden, wodurch sich an dieser Stelle ein hoher Unterdruck ergibt, zur Erzielung von Abtriebskraft mit beitragen.

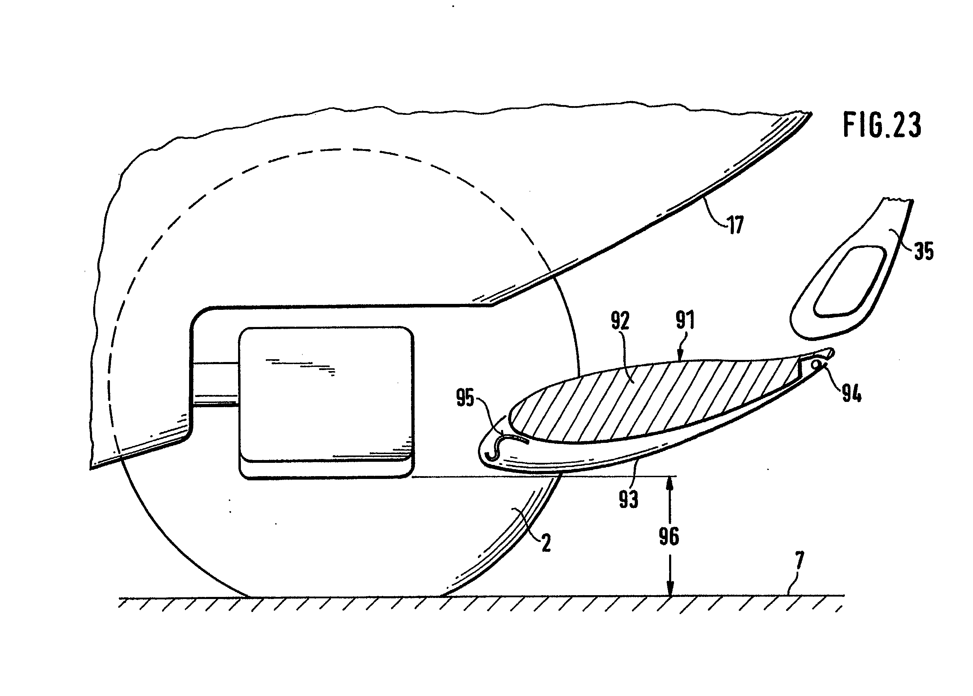

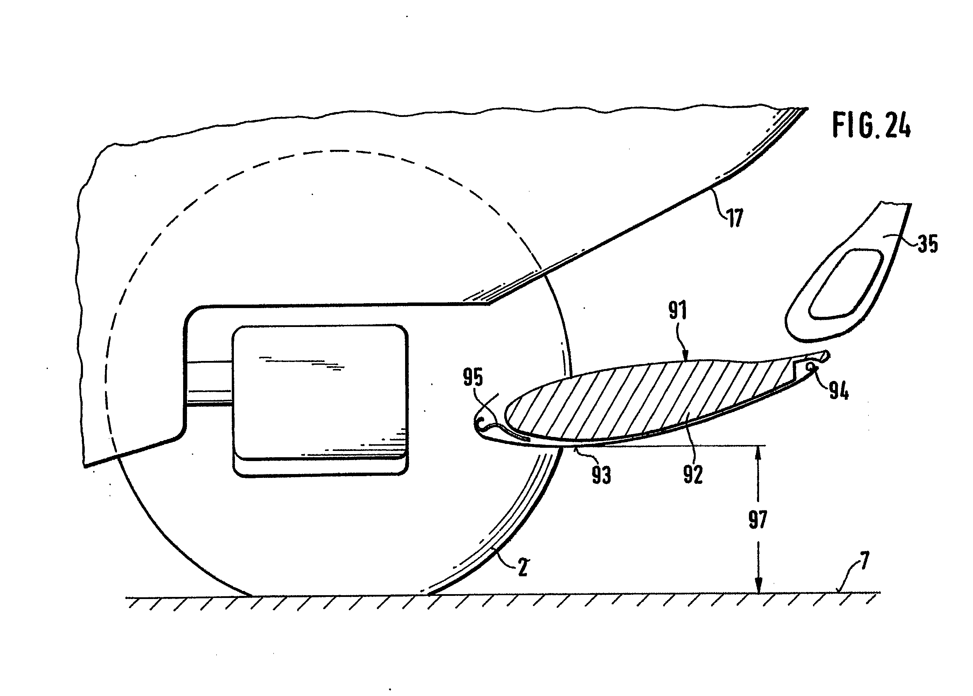

Anders als bei den vorhergehenden Ausführungsbeispielen, bei welchen der jeweilige Luftleitflügel einen bestimmten, stets gleichbleibenden Querschnitt aufweist, weist bei dem Ausführungsbeispiel nach Fig. 23 und 24 ein Luftleitflügel 91 einen veränderbaren Querschnitt auf. Der Luftleitflügel 91 besteht im wesentlichen aus einem Luftleitflügelhauptkörper 92 und einer Luftleitschale 93. Der Luftleitflügelhauptkörper 92 bildet mit seiner Oberseite im wesentlichen die Oberseite (Druckseite) und mit seinem hinteren Ende die Hinterkante des Luftleitflügels 91. Die Luftleitschale 93 bildet im wesentlichen die Unterseite (Unterdruckseite) und die Vorderkante des Luftleitflügels 91. Die Luftleitschale 93 ist mit ihrem hinteren Ende bei 94 im hinteren Bereich des Luftleitflügelhauptkörpers 92 an diesem schwenkbar gelagert. Das Schwenklager 94 ermöglicht der Luftleitschale 93 Relativbewegungen in Höhenrichtung gegenüber dem Luftleitflügelhauptkörper 92. In der Betriebsstellung (Fig. 23) ist die Luftleitschale 93 am weistesten abgesenkt. In dieser Stellung wird sie gegen einen nicht dargestellten Anschlag durch eine Spreizfeder 95 gehalten, die sich einerseits am vorderen Ende des Luftleitflügelhauptkörpers 92 und andererseits am vorderen Ende der Luftleitschale 93 abstützt. Das freie Ende der Luftleitschale 93 ist nach hinten gerichtet, erstreckt sich bis auf einen geringen Abstand bis zu dem vorderen Ende des Luftleitflügelhauptkörpers 92 und bildet das vordere Ende der Oberseite des Luftleitflügels 91.

In der Betriebsstellung weist die Luftleitschale 93 einen geringstmöglichen Bodenabstand 96 auf, der durch gesetzliche Bestimmungen oder durch die Erfordernisse des praktischen Fahrbetriebs bestimmt ist. Aus der Betriebsstellung heraus kann die Luftleitschale 93 gegen die Kraft der Spreizfeder 95 bis zur Anlage an der Unterseite des Luftleitflügelhauptkörpers 92 in die Auslenkendlage angehoben werden (Fig. 24). In dieser Stellung weist die Luftleitschale 93 einen Bodenabstand 97 auf, der erheblich größer als der Bodenabstand 96 in der Betriebsstellung ist. Beispielsweise kann der Bodenabstand 97 25% größer als der Bodenabstand 96 sein.

Die Anordnung der bewegbaren Luftleitschale 93 ermöglicht einerseits, einen Luftleitflugel mit möglichst geringerem Bodenabstand in der Betriebsstellung vorzusehen, der wegen der hohen Zuströmgeschwindigkeit und des hohen Unterdrucks an der Luftleitflügel-Unterseite eine große Abtriebswirkung erbringt, und andererseits beim Rückwärtsfahren auch verhältnismäßig hohe Hindernisse, beispielsweise einen hohen Bordstein, der die Luftleitschale 93 nach oben auslenkt, ohne Beschädigung der Luftleiteinrichtung mit dem Fahrzeugheck zu überfahren, wie es z.B. beim Rückwärtsparken der Fall sein kann.

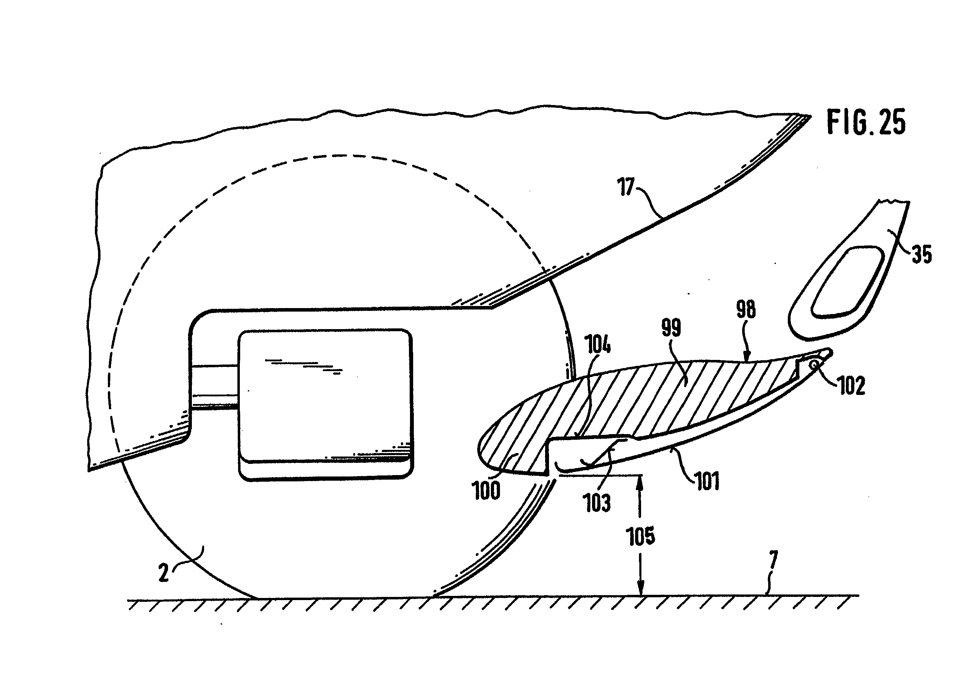

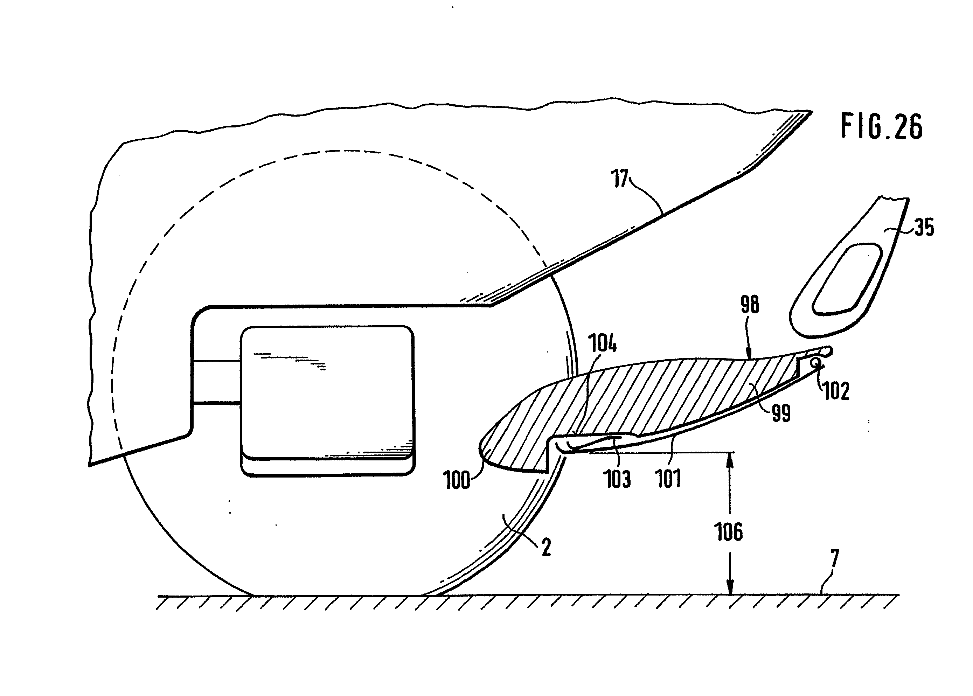

Bei dem Ausführungsbeispiel nach Fig. 25 und 26 ist ebenfalls ein Luftleitflügel 98 mit veränderbarem Querschnitt vorgesehen. Ein Luftleitflügelhauptkörper 99 ragt etwa mit seinem vorderen Drittel in den Raum zwischen den Fahrzeug-Hinterrädern 2. Er bildet mit seiner Oberseite die Oberseite (Druckseite) des Luftleitflügels 98, mit seinem hinteren Ende die Hinterkante des Luftleitflügels 98, mit seinem vorderen Ende die Vorderkante des Luftleitflügels 98 und mit der Unterseite seines vorderen Teiles 100 den vorderen Teil der Unterseite (Unterdruckseite) des Luftleitflügels 98. Hinter dem vorderen Teil 100 ist der Luftleitflügelhauptkörper 99 nicht den aerodynamischen Forderungen entsprechend geformt, sondern flacher gehalten. Im hinteren Bereich des Luftleitflügelhauptkörpers 99 ist eine Luftleitschale 101 in Höhenrichtung schwenkbar befestigt, die sich von dem Schwenklager 102 aus nach vorne bis zu dem vorderen Teil 100 des Luftleitflügelhauptkörpers 99 erstreckt. In ihrer untersten Endstellung, der Betriebsstellung, die in Fig. 25 dargestellt ist, schließt das vordere Ende der Unterseite der Luftleitschale 101 an das hintere Ende der Unterseite des Vorderteils 100 des Luftleitflügelhauptkörpers 99 an und bildet den hinteren Teil der Unterseite (Unterdruckseite) des Luftleitflügels 98. Ihr vorderes Ende reicht geringfügig in den Raum zwischen den Fahrzeug-Hinterrädern 2. Durch eine Spreizfeder 103, die in einer Tasche 104 des Luftleitflügelhauptkörpes 99 angeordnet ist, wird sie in der Betriebsstellung gehalten, aus der sie gegen die Kraft der Spreizfeder 103 nach oben bis zur Analge an den Luftleitflügelhauptkörper 99 ausgelenkt werden kann. In der Betriebsstellung, in welcher sich die Luftleitschale 101 in ihrer unteren Endlage befindet, weist die Luftleitschale 101 einen Bodenabstand 105 auf, der unter Berücksichtigung der gesetzlichen Bestimmungen und der Erfordernisse des praktischen Fahrbetriebs möglichst gering ist, um eine möglichst große Abtriebskraft hervorzurufen. In der Auslenkendlage, in welcher die Luftleitschale 101 gegen die Kraft der Spreizfeder 103 bis zur Anlage an der Unterseite des hinteren Teils des Lufleitflügelhauptkörpers 99 angehoben ist (Fig. 26), weist die Luftleitschale 101 einen Bodenabstand 106 auf, der um etwa ein Viertel größer als der Bodenabstand 105 ist, den die Luftleitschale 101 in der Betriebsstellung aufweist.

Auch diese Ausführungsform ermöglicht eine möglichst niedrige Anordnung des Luftleitflügels 98 für eine günstige Betriebsweise und trotzdem das Rückwärtsparken an einem verhältnismäßig hohen Hindernis, z.B. einem hohen Bordstein, dem die Luftleitschale 101 nachgiebig ausweicht. Die Ausbildung des vorderen Teils des Luftleitflügels 98 als Bestandteil des Luftleitflügelhauptkörpers 99 gewährleistet zudem einen einwandfreien Druckaufbau an dem vorderen Teil des Luftleitflügels 98, der wegen seiner Anordnung zwischen den Fahrzeug-Hinterrädern 2 auch beim Rückwärtsparken an hohen Hindernissen in seiner niedrigen Lage verbleiben kann.

Um eine gute Wirkung über die gesamte Breite des Luftleitflügels und des Nachflügels zu erreichen, können an den Flügelenden oder in ihrer Nähe an den Fahrzeugseiten nicht dargestellte Lufleitwände vorgesehen sein, die sich in Fahrzeuglängsrichtung erstrecken. Sie können sowohl am Fahrzeugaufbau als auch an den Flügelenden befestigt sein.

Bezugszeichenliste

    1 Fahrzeugmotor
    2 Farzeug-Hinterrad
    3 Venturi-Bugschürze
    4 untere Abdeckung
    5 Auspuffanlage
    6 Zentralboden
    7 Fahrbahn (Fahrzeug-Aufstandsfläche)
    8 Schwellerschürze
    9 Hinterradaufhängung
    10 Hinterachsgetriebe gehäuse
    11 Heckboden
    12 Heckdiffusor
    13 Heckabschlußwand
    14 Luftleitflügel

15 hinterer Stoßfänger
16 seitlicher Arm
17 Heckboden
18 ausgerundeter Diffusorabschluß
19 Heckabschlußwand
20 Abreißkante
21 obere Wand
22 Fahrzeugheck
23 Heckspoiler
24 Heckdiffusor
25 Aussparung
26 Strichpunktlinie
27 Abstand (vorne)
28 Abstand (hinten)
29 Luftleitflügel
30 Vorderteil
31 Unterseite
32 Oberseite
33 konkave Ausnehmung
34 Abstand
35 Nachflügel
36 hinterer Stoßfänger
37 Stoßfängerkern
38 Luftleitansatz
39 Rückseite
40 Vorderseite
41 Dicke
42 Durchströmspalt
43 Spaltbreite
44 Düse
45 lichte Weite
46 geschlossener Strom
47 Teilstrom (oberer)
48 Teilstrom (unterer)
49 Luftströmung
50 Summenstrom
51 turbulente Strömung
52 Spaltströmung
53 Druckverteilung
54 Druckverteilung
55 Hilfsflügel
56 Arm
57 Vorflügel
58 Bordsteinfreiheit
59 Luftleitflügel
60 Schwenklager
61 Verstelleinrichtung
62 Hinterachsgetriebegehäuse
63 maximale Bodenfreiheit
64 Vorflügel
65 mittlerer Bodenabstand
66 minimaler Bodenabstand
67 Hinterachsgetriebegehäuse
68 Verdrängungskörper
69 Luftleitflügel
Nachflügel
71 Luftleitflügel
71a Unterseite
72 Wirbelgenerator
73 Nachflügel
74 Rückseite
75 Wirbelgenerator
76 Profil
77 tetraederförmiger Körper
78 Ausnehmung

79 Leitflügel
80 Luftleitflügel
81 mittlerer Teil
82 vordere Dämpferkammer
83 mittlere Dämpferkammer
84 hintere Dämpferkammer
85 Nasenkappe
86 hinterer Teil
87 Ausfpuffendleitung
88 Auspufföffnung
89 Mittellinie
90 Pfeil
91 Luftleitflügel
92 Luftleitflügelhauptkörper
93 Luftleitschale
94 Schwenklager
95 Spreizfeder
96 Bodenabstand (Betriebsstellung)
97 Bodenabstand (Auslenkendlage)
98 Luftleitflügel
99 Luftleitflügelhauptkörper
100 vorderer Teil
101 Luftleitschale
102 Schwenklager
103 Spreizfeder
104 Tasche
105 Bodenabstand (Betriebsstellung)
106 Bodenabstand (Auslenkendlage)
α Neigungswinkel
β Neigungswinkel
γ Winkel
δ Grenzböschungswinkel
ε Abströmwinkel
C Bodenfreiheit
S29 Sogkraft
S35 Sogkraft
R47 Reaktionskraft
R48 Reaktionskraft
V Pfeil (Strömungsrichtung)
X Fahrwiderstandskomponente
-X Vortriebskomponente
-Z Abtriebskomponente

**Patentansprüche**

1. Kraftfahrzeug, insbesondere Personenkraftwagen, mit einem hinteren Stoßfänger, mit einem Fahrzeugboden, der im Heckbereich im wesentlichen glattflächig und zum Fahrzeugende hin ansteigend ausgebildet ist, die Oberseite eines Heckdiffusors, dessen Unterseite von der Fahrbahn gebildet ist, bildet und am Fahrzeugende einen erheblichen Abstand von der Fahrzeug-Aufstandsfläche aufweist, und mit einem Luftleitflügel, der in dem Raum unterhalb des ansteigenden Heckbodens mit Abstand von diesem und niedriger als der hintere Stoßfänger angeordnet ist und an dem bei Anströmung vom Fahrzeugbug her Abtriebskraft wirksam wird, dadurch gekennzeichnet, daß das hintere Ende des ansteigenden Heckbodens (11, 17) mit Abstand von dem hinteren Stoßfänger (15, 36) höher als dieser angeordnet ist und daß der Luftleitflügel (14, 29, 59, 69, 71, 80, 91, 98) derart angeordnet ist, daß seine Unterseite (31, 71a) wenigstens den gleichen Abstand (34) von der Fahrzeug-Aufstandsfläche (Fahrbahn 7) wie der Fahrzeugboden (6) an seiner niedrigsten Stelle in den vor dem Fahrzeugheck (22) befindlichen Fahrzeugbereichen aufweist.

2. Kraftfahrzeug nach Anspruch 1, dadurch gekennzeichnet, daß das vordere Ende des ansteigenden Heckbodens (11, 17) zumindest etwa im Bereich der Fahrzeug-Hinterachse angeordnet ist.

3. Kraftfahrzeug nach Anspruch 1 oder 2, dadurch gekennzeichnet, daß das vordere Ende des ansteigenden Heckbodens (11, 17) wenigstens annähernd im Bereich vor der Hinterachsaufhängung angeordnet ist.

4. Kraftfahrzeug nach Anspruch 1, 2 oder 3, dadurch gekennzeichnet, daß der Übergang von dem vor dem ansteigenden Heckboden (11, 17) angeordneten Bereich des Fahrzeugbodens zu dem ansteigenden Heckboden (11, 17) allmählich erfolgt und gut gerundet ausgebildet ist.

5. Kraftfahrzeug nach einem der Ansprüche 1 bis 4, dadurch gekennzeichnet, daß der Fahrzeugboden in dem Bereich vor dem ansteigenden Heckboden (11, 17) weitgehend glattflächig ausgebildet ist.

6. Kraftfahrzeug nach einem der Ansprüche 1 bis 5, dadurch gekennzeichnet, daß der ansteigende Heckboden (11, 17) zumindest in dem mittleren Bereich zwischen dem vorderen und dem hinteren Anschlußbereich eine im wesentlichen gleichbleibende Steigung aufweist und der von dem mittleren Bereich des ansteigenden Heckbodens (11, 17) und der Waagerechten eingeschlossene Neigungswinkel (α) etwa 10° bis 40°, vorzugsweise etwa 25° beträgt.

7. Kraftfahrzeug nach einem der Ansprüche 1 bis 6, dadurch gekennzeichnet, daß der ansteigende Heckboden (17) in dem hinteren Bereich eine zum hinteren Ende des ansteigenden Heckbodens (17) allmählich zunehmende Steigung und an dem hinteren Ende gegenüber der Waagerechten einen Neigungswinkel (β) von etwa 40° bis 90°, vorzugsweise etwa 70° aufweist.

8. Kraftfahrzeug nach einem der Ansprüche 1 bis 7, dadurch gekennzeichnet, daß das hintere Ende des ansteigenden Heckbodens (11, 17) an die im wesentlichen zumindest etwa senkrecht angeordnete Heckabschlußwand (13, 19) des Fahrzeugs angeschlossen ist.

9. Kraftfahrzeug nach einem der Ansprüche 1 bis 8, dadurch gekennzeichnet, daß an dem hinteren Ende des ansteigenden Heckbodens (17) eine Abreißkante (20) vorgesehen ist.

10. Kraftfahrzeug nach einem der Ansprüche 1 bis 9, dadurch gekennzeichnet, daß der Luftleitflügel (14, 29, 59, 69, 71, 80, 91, 98) derart angeordnet ist, daß er mit seinem vorderen Ende in den Raum zwischen den Fahrzeug-Hinterrädern (2) ragt.

11. Kraftfahrzeug nach Anspruch 10, dadurch gekennzeichnet, daß der Luftleitflügel (14, 29, 59, 69, 71, 80, 91, 98) etwa mit seinem vorderen Drittel in den Raum zwischen den Fahrzeug-Hinterrädern (2) ragt.

12. Kraftfahrzeug nach einem der Ansprüche 1 bis 11, dadurch gekennzeichnet, daß der Luftleitflügel (14, 29, 59, 69, 71, 80, 91, 98) im wesentlichen flach angeordnet ist.

13. Kraftfahrzeug nach einem der Ansprüche 1 bis 12, dadurch gekennzeichnet, daß dem Luftleitflügel (14, 29, 59, 69, 71, 80, 91, 98) mit Abstand von diesem ein Nachflügel (15, 35, 70, 73) nachgeschaltet ist, an dem bei Anströmung vom Fahrzeugbug her ebenfalls Abtriebskraft wirksam wird.

14. Kraftfahrzeug nach Anspruch 13, dadurch gekennzeichnet, daß der Nachflügel (15, 35, 70, 73) mit dem hinteren Stoßfänger (15, 36) eine Baueinheit bildet.

15. Kraftfahrzeug nach Anspruch 14, dadurch gekennzeichnet, daß der hintere Stoßfänger (15, 36) in den Nachflügel (15, 35, 70, 73) integriert ist.

16. Kraftfahrzeug nach Anspruch 13, 14 oder 15, dadurch gekennzeichnet, daß der Luftleitflügel (14, 29, 59, 69, 71, 80, 91, 98) etwa der hinteren Hälfte des mittleren Bereichs des ansteigenden Heckbodens (11, 17) und der Nachflügel (15, 35, 70, 73) dem hinteren Bereich des ansteigenden Heckbodens (11, 17) zugeordnet ist.

17. Kraftfahrzeug nach einem der Ansprüche 13 bis 16, dadurch gekennzeichnet, daß der Luftleitflügel (14, 29, 59, 69, 71, 80, 91, 98) im wesentlichen flach und der Nachflügel (15, 35, 70, 73) im wesentlichen steil angeordnet ist.

18. Kraftfahrzeug nach einem der Ansprüche 13 bis 17, dadurch gekennzeichnet, daß das hintere Ende des Luftleitflügels (29, 59, 71, 80, 91, 98) unterhalb des vorderen Endes des Nachflügels (35, 73) angeordnet ist.

19. Kraftfahrzeug nach Anspruch 18, dadurch gekennzeichnet, daß zwischen dem hinteren Ende des Luftleitflügels (29, 59, 71, 80, 91, 98) und dem vorderen Ende des Nachflügels (35, 73) ein Durchströmspalt (42) mit einer Spaltbreite (43) von etwa 10 mm bis 60 mm vorhanden ist.

20. Kraftfahrzeug nach einem der Ansprüche 13 bis 19, dadurch gekennzeichnet, daß der Abstand der von dem Luftleitflügel (29, 59, 71, 80, 91, 98) und dem Nachflügel (35, 73) gebildeten Luftleiteinrichtung von dem ansteigenden Heckboden (17) von vorne nach hinten zunächst größer und im hinteren Bereich wieder kleiner wird.

21. Kraftfahrzeug nach Anspruch 20, dadurch gekennzeichnet, daß der Abstand des vorderen Endes des Luftleitflügels (29, 59, 71, 80, 91, 98) von dem ansteigenden Heckboden (17) etwa ebenso groß wie oder größer als der Abstand (45) des hinteren Endes des Nachflügels (35, 73) von dem hinteren Ende des ansteigenden Heckbodens (17) ist.

22. Kraftfahrzeug nach einem der Ansprüche 13 bis 21, dadurch gekennzeichnet, daß die lichte Weite (45) zwischen dem hinteren Ende des Nachflügels (35, 73) und dem ansteigenden Heckboden (17) etwa 30 mm bis 200 mm beträgt.

23. Kraftfahrzeug nach einem der Ansprüche 13 bis 22, dadurch gekennzeichnet, daß der hintere Bereich des Nachflügels (35, 73) mit dem hinteren Bereich des ansteigenden Heckbodens (17) eine Leitung mit über ihre Länge gleichbleibendem Querschnitt oder eine Düse (44) jeweils mit im wesentlichen nach oben und leicht nach hinten gerichteter Ausströmrichtung bildet.

24. Kraftfahrzeug nach einem der Ansprüche 13 bis 23, dadurch gekennzeichnet, daß der hintere Bereich des Nachflügels (35, 73) mit der Waagerechten einen Winkel (ε) von etwa 50° bis 90° einschließt.

25. Kraftfahrzeug nach einem der Ansprüche 13 bis 24, dadurch gekennzeichnet, daß der hintere Bereich des Nachflügels (35, 73) eine nur geringe Verjüngung aufweist und im wesentlichen stumpf endet.

26. Kraftfahrzeug nach Anspruch 25, dadurch gekennzeichnet, daß der hintere Bereich des Nachflügels (35, 73) eine Dicke (41) von etwa 10 mm bis 60 mm aufweist.

27. Kraftfahrzeug nach einem der Ansprüche 13 bis 26, dadurch gekennzeichnet, daß hinter dem zwischen dem hinteren Ende des Luftleitflügels (29) und dem vorderen Ende des Nachflügels (35) vorhandenen Durchströmspalt (42) ein Hilfsflügel (55) angeordnet ist.

28. Kraftfahrzeug nach einem der Ansprüche 1 bis 27, dadurch gekennzeichnet, daß dem Luftleitflügel (29, 59) ein Vorflügel (57, 64) zugeordnet ist, der innerhalb der Hüllkurve der Fahrzeug-Hinterräder (2) angeordnet ist und dessen Unterseite einen geringeren Abstand von der Fahrzeug-Aufstandsfläche (Fahrbahn 7) als die Unterseite des Luftleitflügels (29, 59) aufweist.

29. Kraftfahrzeug nach einem der Ansprüche 1 bis 28, dadurch gekennzeichnet, daß der Luftleitflügel (59) in Höhenrichtung verstellbar an dem Fahrzeugaufbau gelagert ist.

30. Kraftfahrzeug nach Anspruch 29, dadurch gekennzeichnet, daß die Lagerung als Schwenklagerung ausgebildet ist.

31. Kraftfahrzeug nach Anspruch 30, dadurch gekennzeichnet, daß das Schwenklager (60) im hinteren Bereich des Luftleitflügels (59) vorgesehen ist.

32. Kraftfahrzeug nach Anspruch 29, 30 oder 31, dadurch gekennzeichnet, daß eine Luftleitflügel-Höhenverstelleinrichtung (61) vorgesehen ist.

33. Kraftfahrzeug nach Anspruch 32, dadurch gekennzeichnet, daß eine in Abhängigkeit von der Höhenlage des Fahrzeugaufbaus selbsttätig wirksame Luftleitflügel-Höhenverstelleinrichtung vorgesehen ist.

34. Kraftfahrzeug nach Anspruch 29, 30 oder 31, dadurch gekennzeichnet, daß der Luftleitflügel (59) mit wenigstens einer der Lagerungen der Fahrzeug-Hinterräder (2) in Verstellverbindung steht.

35. Kraftfahrzeug nach einem der Ansprüche 1 bis 34, dadurch gekennzeichnet, daß der Luftleitflügel (71) und/oder der Nachflügel (73) auf der Unterdruckseite (71a, 74) Wirbelgeneratoren (75, 76, 77, 79) aufweist.

36. Kraftfahrzeug nach einem der Ansprüche 1 bis 35, dadurch gekennzeichnet, daß der Luftleitflügel (80) als Schalldämpfer, vorzugsweise als Nachschalldämpfer ausgebildet ist.

37. Kraftfahrzeug nach Anspruch 36, dadurch gekennzeichnet, daß die Dämpferkammern (82, 83, 84) in dem Anströmrichtung mittleren Teil (81) des Luftleitflügels (80) angeordnet sind.

38. Kraftfahrzeug nach Anspruch 36 oder 37, dadurch gekennzeichnet, daß der hintere Teil (86) des Luftleitflügels (80) als Strahlungsschutzabdeckung ausgebildet ist.

39. Kraftfahrzeug nach Anspruch 36, 37 oder 38, dadurch gekennzeichnet, daß das Ausströmende der Auspuffendleitung (87) in der hinteren Kante des Luftleitflügels (80) angeordnet ist.

40. Kraftfahrzeug nach einem der Ansprüche 10 bis 39, dadurch gekennzeichnet, daß die Auspuffendleitung (87) auf den vorderen Bereich der Unterdruckseite (39) des Nachflügels (35) hin ausgerichtet ist.

41. Kraftfahrzeug nach einem der Ansprüche 1 bis 40, dadurch gekennzeichnet, daß der Luftleitflügel (91, 98) einen veränderbaren Querschnitt aufweist.

42. Kraftfahrzeug nach Anspruch 41, dadurch gekennzeichnet, daß die Unterseite des Luftleitflügels (91, 98) zumindest teilweise als Luftleitschale (93, 101) ausgebildet ist, die mit ihrem hinteren Ende an dem hinteren Ende eines den Luftleitflügel (91, 98) im übrigen bildenden Luftleitflügelhauptkörpers (92, 99) zwischen einer unteren Endlage und einer oberen Endlage um eine waagerechte Achse schwenkbar befestigt ist.

43. Kraftfahrzeug nach Anspruch 42, dadurch gekennzeichnet, daß zwischen Luftleitflügelhauptkörper (92, 99) und Luftleitschale (93, 101) wenigstens eine Spreizfeder (95, 103) vorgesehen ist.

44. Kraftfahrzeug nach Anspruch 41 oder 42, dadurch gekennzeichnet, daß die Luftleitschale (93) über das vordere Ende des Luftleitflügelhauptkörpers (92) hinaus reicht.

45. Kraftfahrzeug nach Anspruch 41 oder 42, dadurch gekennzeichnet, daß die Luftleitschale (101) im wesentlichen nur über den Teil des Luftleitflügelhauptkörpers (99) reicht, der außerhalb der Hüllkurve der Fahrzeug-Hinterräder (2) angeordnet ist, und in ihrer unteren Endlage an die Unterseite des zwischen den Fahrzeug-Hinterrädern (2) angeordneten vorderen Teils (100) des Luftleitflügelhauptkörpers (99) anschließt.

46. Kraftfahrzeug nach einem der vorhergehenden Ansprüche, dadurch gekennzeichnet, daß an den Fahrzeugseiten im Heckbereich sich im wesentlichen in Fahrzeuglängsrichtung erstreckende Luftleitwände vorgesehen sind.

47. Kraftfahrzeug nach Anspruch 46, dadurch gekennzeichnet, daß die Luftleitwände sich vom Fahrzeugkörper nach unten bis etwa in Höhe des Luftleitflügels (14, 29, 59, 69, 71, 80, 91, 98) und ggf. des Nachflügels (15, 35, 70, 73) erstrecken.

48. Kraftfahrzeug nach Anspruch 46, dadurch gekennzeichnet, daß die Luftleitwände an den Enden des Luftleitflügels (14, 29, 59, 69, 71, 80, 91, 98) und/oder des Nachflügels (15, 35, 70, 73) angeordnet sind.

## Claims

1. A motor vehicle, more particularly a passenger car, comprising a rear bumper, a vehicle floor which is substantially smooth in the tail region and is constructed so as rise towards the end of the vehicle and constitutes the top of a tail diffuser the underside of which is the road and, at the end of the vehicle, is at a considerable distance from the contact surface between the vehicle and the road, the vehicle also comprising an air guide vane which is disposed in the space underneath the rising tail floor and at a distance therefrom and lower than the rear bumper and is subjected to a downward force when there is an incoming flow from the front of the vehicle, characterised in that the rear end of the rising tail floor (11, 17) is disposed at a distance from and higher than the rear bumper (15, 36) and the air guide vane (14, 29, 59, 69, 71, 80, 91, 98) is disposed so that its underside (31, 71a) is at least the same distance (34) from the vehicle contact surface (the road 7) as the vehicle floor (6) at its lowest place in the region of the vehicle in front of the tail (22).

2. A vehicle according to claim 1, characterised in that the front end of the rising tail floor (11, 17) is disposed at least approximately in the region of the back axle.

3. A vehicle according to claim 1 or 2, characterised in that the front end of the rising tail floor (11, 17) is disposed at least substantially in the region in front of the rear axle suspension.

4. A vehicle according to claim 1, 2 or 3, characterised in that the transition to the rising tail floor (11, 17) from the region of the vehicle floor disposed in front thereof occurs gradually and is wellrounded.

5. A vehicle according to any of claims 1 to 4, characterised in that the floor is substantially smooth in the region in front of the rising tail floor (11, 17).

6. A vehicle according to any of claims 1 to 5, characterised in that the rising tail floor (11, 17), at least in the middle region before the front and the rear connecting region, has a substantially uniform gradient, and the angle ($\alpha$) between the horizontal and the middle region of the rising tail floor (11, 17) is about 10° to 40°, preferably about 25°.

7. A vehicle according to any of claims 1 to 6, characterised in that the rear region of the rising tail floor (17) has a gradient gradually increasing towards the rear end of the rising tail floor (17) and at the rear end is at an angle ($\beta$) to the horizontal of about 40° to 90°, preferably 70°.

8. A vehicle according to any of claims 1 to 7, characterised in that the rear end of the rising tail floor (11, 17) is adjacent the tail terminal wall (13, 19) which is disposed at least substantially vertically.

9. A vehicle according to any of claims 1 to 8, characterised in that a sharp edge (20) is provided at the rear end of the rising tail floor (17).

10. A vehicle according to any of claims 1 to 9, characterised in that the air guide vane (14, 29, 59, 69, 71, 80, 91, 98) is disposed so that its front end projects into the space between the back wheels (2) of the vehicle.

11. A vehicle according to claim 10, characterised in that substantially the front third of the air guide vane (14, 29, 59, 69, 71, 80, 91, 98) projects into the space between the front wheels (2) of the vehicle.

12. A vehicle according to any of claims 1 to 11, characterised in that the air guide vane (14, 29, 59, 69, 71, 80, 91, 98) is disposed substantially flat.

13. A vehicle according to any of claims 1 to 12, characterised in that an after-vane (15, 35, 70, 73) is disposed at a distance behind the air guide vane (14, 29, 59, 69, 71, 80, 91, 98) and is likewise subjected to downward force when the oncoming flow is from the front of the vehicle.

14. A vehicle according to claim 13, characterised in that the after-vane (15, 35, 70, 73) forms a structural unit with the rear bumper (15, 36).

15. A vehicle according to claim 14, characterised in that the rear bumper (15, 36) is incorporated in the after-vane (15, 35, 70, 73).

16. A vehicle according to claim 13, 14 or 15, characterised in that the air guide vane (14, 29, 59, 69, 71, 80, 91, 98) is associated substantially with the rear half of the middle region of the rising tail floor (11, 17), and the after-vane (15, 35, 70, 73) is associated with the rear region of the rising tail floor (11, 17).

17. A vehicle according to any of claims 13 to 16, characterised in that the air guide vane (14, 29, 59, 69, 71, 80, 91, 98) is substantially flat and the after-vane (15, 35, 70, 73) is disposed at a substantially steep angle.

18. A vehicle according to any of claims 13 to 17, characterised in that the rear end of the air guide vane (29, 59, 71, 80, 91, 98) is disposed under the front end of the after-vane (35, 73).

19. A vehicle according to claim 18, characterised in that a flow-through gap (42) having a width (43) of about 10 mm to 60 mm is provided between the rear end of the air guide vane (29, 59, 71, 80, 91, 98) and the front end of the after-vane (35, 73).

20. A vehicle according to any of claims 13 to 19, characterised in that the distance between the rising tail floor (17) and the air guide device formed by the air guide vane (29, 59, 71, 80, 91, 98) and the after-vane (35, 73) initially increases from front to back and then becomes smaller in the rear region.

21. A vehicle according to claim 20, characterised in that the distance between the front end of the air guide vane (29, 59, 71, 80, 91, 98) and the rising tail floor (17) is about equal to or greater than the distance (45) between the rear end of the after-vane (35, 73) and the rear end of the rising tail floor (17).

22. A vehicle according to any of claims 13 to 21, characterised in that the internal width (45) between the rear end of the after-vane (35, 73) and the rising tail floor (17) is about 30 mm to 200 mm.

23. A vehicle according to any of claims 13 to 22, characterised in that the rear region of the after-vane (35, 73) cooperates with the rear region of the rising tail floor (17) to form a pipe having a uniform cross-section along its length or a nozzle (44), in each case having an outflow direction directed substantially upwards and slightly to the rear.

24. A vehicle according to any of claims 13 to 23, characterised in that the rear region of the after-vane (35, 73) is at an angle ($\varepsilon$) of approximately 50° to 90° to the horizontal.

25. A vehicle according to any of claims 13 to 24, characterised in that the rear region of the after-vane (35, 73) tapers only slightly and has a substantially blunt ending.

26. A vehicle according to claim 25, characterised in that the rear region of the after-vane (35, 73) has a thickness (41) of about 10 mm to 60 mm.

27. A vehicle according to any of claims 13 to 26, characterised in that an auxiliary vane (55) is provided behind the flow-through gap (42) between the rear end of the air guide vane (29) and the front end of the after-vane (35).

28. A vehicle according to any of claims 1 to 27, characterised in that the air guide vane (29, 59) is associated with a front vane (57, 64) which is disposed inside the envelope of the back wheels (2) of the vehicle and the underside of which is at a smaller distance from the vehicle contact surface (the road 7) than the underside of the air guide vane (29, 59).

29. A vehicle according to any of claims 1 to 28, characterised in that the air guide vane (29) is mounted on the car body so as to be vertically adjustable.

30. A vehicle according to claim 29, characterised in that the mounting is in the form of a swivel bearing.

31. A vehicle according to claim 30, characterised in that the swivel bearing (60) is disposed in the rear region of the air guide vane (59).

32. A vehicle according to claim 29, 30 or 31, characterised in that a device (61) is provided for vertically adjusting the air guide vane.

33. A vehicle according to claim 32, characterised in that a device for vertically adjusting the air guide vane is provided and operates automatically in dependence on the vertical position of the car body.

34. A vehicle according to claim 29, 30 or 31, characterised in that the air guide vane (59) is connected for purposes of adjustment to at least one of the bearings of the back wheels (2) of the vehicle.

35. A vehicle according to any of claims 1 to 34, characterised in that the air guide vane (71) and/or the after-vane (73) comprises turbulence generators (75, 76, 77, 79) on the negative-pressure side (71a, 74).

36. A vehicle according to any of claims 1 to 35, characterised in that the air guide vane (80) is constructed as an exhaust silencer, preferably as an after-exhaust silencer.

37. A vehicle according to claim 36, characterised in that the silencer chambers (82, 83, 84) are disposed in the central part (81) of the air guide vane (80) in the direction of oncoming flow.

38. A vehicle according to claim 36 or 37, characterised in that the rear part (86) of the air guide vane (80) is constructed as an anti-radiation cover.

39. A vehicle according to claim 36, 37 or 38, characterised in that the outflow end of the exhaust end pipe (87) is disposed in the rear edge of the air guide vane (80).

40. A vehicle according to any of claims 10 to 39, characterised in that the exhaust end pipe (87) is directed towards the front region of the negative-pressure guide (39) of the after-vane (35).

41. A vehicle according to any of claims 1 to 40, characterised in that the air guide vane (91, 98) has a variable cross-section.

42. A vehicle according to claim 41, characterised in that the underside of the air guide vane (91, 98) is at least partly constructed as an air guide dish (93, 101) the rear end of which is secured to the rear end of an air-guide-vane main body (92, 99) which also constitutes the air guide vane (91, 98) so as to be pivotable around a horizontal axis between a bottom end position and a top end position.

43. A motor vehicle according to claim 42, characterised in that at least one expanding spring (95, 103) is disposed between the air-guide-vane main body (92, 99) and the air guide dish (93, 101).

44. A vehicle according to claim 41 or 42, characterised in that the air guide dish (93) extends beyond the front end of the air-guide-vane main body (92).

45. A vehicle according to claim 41 or 42, characterised in that the air guide dish (101) extends substantially only over that part of the air-guide-vane main body (99) which is disposed outside the envelope of the back wheels (2) of the vehicle, and in the lower end position the air guide dish abuts the underside of the front part (100) of the air-guide-vane main body (99) which is disposed between the front wheels (2) of the vehicle.

46. A vehicle according to any of the preceding claims, characterised in that air guide walls extending substantially in the longitudinal direction of the vehicle are provided at the sides of the vehicle in the tail region.

47. A vehicle according to claim 46, characterised in that the air guide walls extend from the vehicle body downwards to about the height of the air guide vane (14, 29, 59, 69, 71, 80, 91, 98) and, if required, of the after-vane (15, 35, 70, 73).

48. A vehicle according to claim 46, characterised in that the air guide walls are disposed at the ends of the air guide vane (14, 29, 59, 69, 71, 80, 91, 98) and/or of the after-vane (15, 35, 70, 73).

**Revendications**

1. Véhicule automobile, notamment voiture particulière, comprenant un pare-chocs arrière, avec un plancher de véhicule qui est réalisé avec une surface sensiblement plate dans la zone arrière et montant vers l'extrémité du véhicule, formant la face supérieure d'un diffuseur arrière dont la face inférieure est formée par la piste de roulement et présentant à l'extrémité du véhicule un écartement important par rapport à la surface de pose du véhicule, et comportant un aileron de guidage d'air qui est disposé dans l'espace situé au-dessous du plancher arrière, à distance de ce dernier et plus bas que le pare-chocs arrière et sur lequel agit une force descensionnelle lorsqu'il est soumis à un écoulement venant de l'avant du véhicule, caractérisé en ce que l'extrémité arrière du plancher arrière montant (11, 17) est disposée à distance du pare-chocs arrière (15, 36), plus haut que ce dernier, et en ce que l'aileron de guidage d'air (14, 29, 59, 69, 71, 80, 91, 98) est disposé de telle façon que sa face inférieure (31, 71a) présente au moins le même écartement (34) par rapport à la surface de pose du véhicule (piste de roulement 7) que le plancher du véhicule (6) à son emplacement le plus bas, dans les zones se trouvant devant l'arrière du véhicule (22).

2. Véhicule automobile selon la revendication 1, caractérisé en ce que l'extrémité avant du plancher montant (11, 17) est disposée au moins à peu près dans la zone de l'essieu arrière du véhicule.

3. Véhicule automobile selon une des revendications 1 ou 2, caractérisé en ce que l'extrémité avant du plancher arrière montant (11, 17) est disposée au moins approximativement dans la zone située devant la suspension de l'essieu arrière.

4. Véhicule automobile selon une des revendications 1, 2 ou 3, caractérisé en ce que la transition entre la zone du plancher du véhicule qui est disposée devant le plancher arrière montant (11, 17) et le plancher arrière montant (11, 17) s'effectue graduellement et est réalisée de manière bien arrondie.

5. Véhicule automobile selon l'une des revendications 1 à 4, caractérisé en ce que le plancher du véhicule est réalisé avec une surface largement plate dans la zone située devant le plancher arrière montant (11, 17).

6. Véhicule automobile selon l'une des revendications 1 à 5, caractérisé en ce que le plancher arrière montant (11, 17) présente au moins dans la zone centrale située, entre la zone de raccordement avant et la zone de raccordement arrière, une pente sensiblement constante et l'angle d'inclinaison ($\alpha$) qui est constitué par la zone centrale du plancher arrière montant (11, 17) et l'horizontale est d'à peu près 10° à 40°, de préférence d'environ 25°.

7. Véhicule automobile selon l'une des revendications 1 à 6, caractérisé en ce que le plancher arrière montant (11, 17) présente dans la zone arrière une pente croissant progressivement en allant vers l'extrémité arrière du plancher arrière montant (11, 17) et, à l'extrémité arrière, un angle d'inclinaison ($\beta$) par rapport à l'horizontale qui est d'à peu près 40° à 90°, de préférence d'à peu près 70°.

8. Véhicule automobile selon l'une des revendications 1 à 7, caractérisé en ce que l'extrémité arrière du plancher arrière montant (11, 17) est raccordée à la paroi de délimitation arrière (13, 19) du véhicule, qui est disposée pratiquement au moins à peu près verticalement.

9. Véhicule automobile selon l'une des revendications 1 à 8, caractérisé en ce qu'une arête de décollement (20) est prévue à l'extrémité arrière du plancher arrière montant (11, 17).

10. Véhicule automobile selon l'une des revendications 1 à 9, caractérisé en ce que l'aileron de guidage d'air (14, 29, 59, 69, 71, 80, 91, 98) est disposé de façon qu'il dépasse par son extrémité arrière dans l'espace situé entre les roues arrière (2) du véhicule.

11. Véhicule automobile selon la revendication 10, caractérisé en ce que l'aileron de guidage d'air (14, 29, 59, 69, 71, 80, 91, 98) dépasse par son tiers avant dans l'espace situé entre les roues arrière (2) du véhicule.

12. Véhicule automobile selon la revendication 1 à 12, caractérisé en ce que l'aileron de guidage d'air (14, 29, 59, 69, 71, 80, 91, 98) est pour l'essentiel plat.

13. Véhicule automobile selon l'une des revendications 1 à 12, caractérisé en ce qu'un aileron arrière (15, 35, 70, 73) est placé en aval et à distance de l'aileron de guidage d'air (14, 29, 59, 69, 71, 80, 91, 98) et qu'une force également descensionnelle agit sur cet aileron lorsqu'il est soumis à un écoulement provenant de l'avant du véhicule.

14. Véhicule automobile selon la revendication 13, caractérisé en ce que l'aileron arrière (15, 35, 70, 73) forme une unité de construction avec le pare-chocs arrière (15, 36).

15. Véhicule automobile selon la revendication 14, caractérisé en ce que le pare-chocs arrière (15, 36) est intégré dans l'aileron arrière (15, 35, 70, 73).

16. Véhicule automobile selon la revendication 15, caractérisé en ce que l'aileron de guidage d'air (14, 29, 59, 69, 71, 80, 91, 98) est associé à peu près à la moitié arrière de la zone centrale du plancher arrière (11, 17), et que l'aileron arrière (15, 35, 70, 73) est associé à la zone arrière du plancher arrière montant (11, 17).

17. Véhicule automobile selon l'une des revendications 13 à 16, caractérisé en ce que l'aileron de guidage d'air (14, 29, 59, 69, 71, 80, 91, 98) est disposé essentiellement à plat et que l'aileron arrière (15, 35, 70, 73) est disposé de manière essentiellement abrupte.

18. Véhicule automobile selon l'une des revendications 13 à 17, caractérisé en ce que l'extrémité arrière de l'aileron de guidage d'air (29, 59, 71, 80, 91, 98) est disposée au-dessous de l'extrémité avant de l'aileron arrière (35, 73).

19. Véhicule automobile selon la revendication 18, caractérisé en ce qu'un interstice d'écoulement (42) présentant une largeur d'interstice (43) d'environ 10 mm à 60 mm existe entre l'extrémité arrière de l'aileron de guidage d'air (29, 59, 71, 80, 91, 98) et l'extrémité avant de l'aileron arrière (35, 73).

20. Véhicule automobile selon l'une des revendications 13 à 19, caractérisé en ce que l'écartement entre le dispositif de guidage d'air, formé par l'aileron de guidage d'air (29, 59, 71, 80, 91, 98) et l'aileron arrière (35, 73), et le plancher arrière montant (17) devient d'abord plus grand, en allant de l'avant vers l'arrière, et redevient à nouveau plus faible dans la zone arrière.

21. Véhicule automobile selon la revendication 20, caractérisé en ce que l'écartement entre l'extrémité avant de l'aileron de guidage d'air (29, 59, 71, 80, 91, 98) et le plancher arrière montant (17) est égal ou supérieur à l'écartement (45) entre extrémité arrière de l'aileron arrière (35, 73) et extrémité arrière du plancher arrière montant (17).

22. Véhicule automobile selon l'une des revendications 13 à 21, caractérisé en ce que l'espace libre (45) compris entre l'extrémité arrière de l'aileron arrière (35, 73) et le plancher arrière montant (17) est d'environ 30 à 200 mm.

23. Véhicule automobile selon l'une des revendications 13 à 22, caractérisé en ce que la zone arrière de l'aileron arrière (35, 73) forme avec la zone arrière du plancher arrière montant (17) une conduite présentant une section transversale constante sur sa longueur ou une buse (44), ayant chacune une direction de sortie d'écoulement essentiellement orientée vers le haut et légèrement vers l'arrière.

24. Véhicule automobile selon l'une des revendications 13 à 23, caractérisé en ce que la zone arrière de l'aileron arrière (35, 73) fait avec l'horizontale un angle (ε) d'à peu près 50° à 90°.

25. Voiture automobile selon l'une des revendications 13 à 24, caractérisé en ce que la zone arrière de l'aileron arrière (35, 73) ne présente qu'un effilement faible et se termine de manière sensiblement tronquée.

26. Véhicule automobile selon la revendication 25, caractérisé en ce que la zone arrière de l'aileron arrière (35, 73) présente une épaisseur (41) d'à peu près 10 à 60 mm.

27. Véhicule automobile selon la revendication 13 à 26, caractérisé en ce qu'un aileron auxiliaire (55) est disposé derrière l'interstice d'écoulement (42) existant entre l'extrémité arrière de l'aileron de guidage d'air (29) et l'extrémité avant de l'aileron arrière (35).

28. Véhicule automobile selon la revendication 1 à 27, caractérisé en ce qu'un aileron avant (57, 64) est associé à l'aileron de guidage d'air (29, 59) et est disposé à l'intérieur de la courbe enveloppe des roues arrière (2) du véhicule et dont la face inférieure présente un écartement inférieur, par rapport à la surface de pose du véhicule (piste de roulement 7), à celui de la face inférieure de l'aileron de guidage d'air (29, 59).

29. Véhicule automobile selon l'une des revendications 1 à 28, caractérisé en ce que l'aileron de guidage d'air (59) est monté sur la carrosserie du véhicule de manière réglable dans le sens de la hauteur.

30. Véhicule automobile selon la revendication 29, caractérisé en ce que le montage est réalisé sous la forme d'un palier pivotant.

31. Véhicule automobile selon la revendication 30, caractérisé en ce que le palier pivotant (60) est prévu dans la zone arrière de l'aileron de guidage d'air (59).

32. Véhicule automobile selon la revendication 29, 30, caractérisé en ce qu'il est prévu un dispositif de réglage de hauteur (61) de l'aileron de guidage d'air.

33. Véhicule automobile selon la revendication 32, caractérisé en ce qu'il est prévu un dispositif de réglage de hauteur de l'aileron de guidage qui agit automatiquement en fonction de la position en hauteur de la carrosserie du véhicule.

34. Véhicule automobile selon la revendication 29, 30 ou 31, caractérisé en ce que l'aileron de guidage d'air (59) est placé dans une liaison réglable avec au moins l'un des supports des roues arrière (2) du véhicule.

35. Véhicule automobile selon l'une des revendications 1 à 34, caractérisé en ce que l'aileron de guidage d'air (71) et/ou l'aileron arrière (73) présentent des générateurs de tourbillons (75, 76, 77, 79) placés sur la face en dépression (71a, 74).

36. Véhicule automobile selon l'une des revendications 1 à 35, caractérisé en ce que l'aileron de guidage d'air (80) est réalisé sous la forme d'un silencieux, de préférence sous la forme d'un silencieux aval.

37. Véhicule automobile selon la revendication 36, caractérisé en ce que les chambres d'amortissement de bruit (82, 83, 84) sont disposées dans la partie centrale (81) de l'aileron de guidage d'air (80), dans la direction d'arrivée de l'écoulement.

38. Véhicule automobile selon la revendication 36 ou 37 ou 38, caractérisé en ce que la partie arrière (86) de l'aileron de guidage d'air (80) est réalisée sous la forme d'un revêtement de protection contre le rayonnement.

39. Véhicule automobile selon la revendication 36, 37, caractérisé en ce que l'extrémité de sortie d'écoulement de la conduite d'extrémité d'échappement (87) est disposée dans l'arête arrière de l'aileron de guidage d'air (80).

40. Véhicule automobile selon l'une des revendications 10 à 39, caractérisé en ce que la conduite d'extrémité de l'échappement (87) est alignée en direction de la zone avant de la face de dépression (39) de l'aileron arrière (35).

41. Véhicule automobile selon l'une des revendications 1 à 40, caractérisé en ce que l'aileron de guidage d'air (91, 98) présente une section transversale modifiable.

42. Véhicule automobile selon la revendication 41, caractérisé en ce que la face inférieure de l'aileron de guidage d'air (91, 98) est réalisée au moins partiellement sous la forme d'une coque de guidage d'air (93, 101), qui est fixée par son extrémité arrière à l'extrémité arrière d'un corps principal d'aileron de guidage d'air en formant du reste l'aileron de guidage d'air (91, 98), et peut pivoter autour d'un axe horizontal, entre une position finale inférieure et une position finale supérieure.

43. Véhicule automobile selon la revendication 42, caractérisé en ce qu'il est prévu au moins un ressort d'écartement (95, 103) entre le corps principal d'aileron de guidage d'air (92, 99) et la coque de guidage d'air (93, 101).

44. Véhicule automobile selon une des revendications 41 ou 42, caractérisé en ce que la coque de guidage d'air (93) arrive au-dessus de l'extrémité avant du corps principal d'aileron de guidage d'air (92).

45. Véhicule automobile selon une des revendications 41 ou 42, caractérisé en ce que la coque de guidage d'air (101) n'arrive pratiquement que sur la partie du corps principal d'aileron de guidage d'air (99) qui est disposée à l'extérieur de la courbe enveloppe des roues arrière (2) du véhicule, et que, dans sa position finale inférieure, elle se raccorde à la face inférieure de la partie avant (100) du corps principal d'aileron de guidage d'air (99) qui est disposée entre les zones arrière (2) du véhicule.

46. Véhicule automobile selon l'une des revendications précédentes, caractérisé en ce que des parois de guidage d'air s'étendant essentiellement dans le sens longitudinal du véhicule sont prévues sur les côtés du véhicule, dans la zone arrière.

47. Véhicule automobile selon la revendication 46, caractérisé en ce que les parois de guidage d'air s'étendent en partant du corps du véhicule, vers le bas, jusqu'à peu près au niveau de l'aileron de guidage d'air (14, 29, 59, 69, 80, 91, 98) et, le cas échéant, de l'aileron arrière (15, 35, 70, 73).

48. Véhicule automobile selon la revendication 46, caractérisé en ce que les parois de guidage d'air sont disposées aux extrémités de l'aileron de guidage d'air (14, 29, 59, 69, 80, 91, 98) et/ou de l'aileron arrière (15, 35, 70, 73).

FIG.1

FIG.2

EP 0 257 341 B1

FIG. 3

EP 0 257 341 B1

FIG. 4

FIG.5

FIG.6

47

R47

-Z47

-X47

48

R48

35

-Z48

-X48

54

S35

29

X35

-Z35

S29

53

-Z29

7

-X 29

EP 0 257 341 B1

FIG.7

17

42

29

48

7

δ

56

35

55

EP 0 257 341 B1

FIG.8

FIG.9

FIG.10

FIG. 11

35

61

59

60

62

64

66

2

C

7

EP 0 257 341 B1

FIG.12

FIG.13

FIG.14

73

75

74

71

72

71a

FIG.15

76     76

V

FIG.18

79

79

79

V  V

FIG.17

77

V

FIG.16

76     76

V

FIG.19

78

79

V

# FIG.20

# FIG.21

# FIG.22

FIG.23

17

35

92 91

94

95

93

2

96

7

EP 0 257 341 B1

FIG.24

FIG.25

EP 0 257 341 B1

FIG.26